(19) **Europäisches Patentamt / European Patent Office / Office européen des brevets**

(11) **EP 1 623 437 B1**

(12) **EUROPEAN PATENT SPECIFICATION**

(45) Date of publication and mention
of the grant of the patent:
**05.12.2007 Bulletin 2007/49**

(51) Int Cl.:
***H01B 1/24*** (2006.01)  ***C08K 3/04*** (2006.01)

(21) Application number: **04760328.7**

(22) Date of filing: **22.04.2004**

(86) International application number:
**PCT/US2004/012432**

(87) International publication number:
**WO 2004/097853 (11.11.2004 Gazette 2004/46)**

(54) **CONDUCTIVE CARBON NANOTUBE-POLYMER COMPOSITE**

LEITFÄHIGER KOHLENSTOFF-NANORÖHRENPOLYMERVERBUNDSTOFF

COMPOSITE CONDUCTEUR COMPRENANT DES NANOTUBES DE CARBONE ET UN POLYMERE

(84) Designated Contracting States:
**AT BE BG CH CY CZ DE DK EE ES FI FR GB GR HU IE IT LI LU MC NL PL PT RO SE SI SK TR**

(30) Priority: **24.04.2003 US 465259 P**

(43) Date of publication of application:
**08.02.2006 Bulletin 2006/06**

(73) Proprietor: **Carbon Nanotechnologies, Inc.**
**Houston, TX 77084 (US)**

(72) Inventors:
• **GRUNLAN, Jamie, C.**
**Pasadena, CA 91106 (US)**
• **CROSS, Virginia, R.**
**Houston, TX 77084 (US)**
• **SMITH, Kenneth, A.**
**Houston, TX 77067 (US)**

(74) Representative: **Nash, David Allan**
**HASELTINE LAKE,**
**Redcliff Quay**
**120 Redcliff Street**
**Bristol BS1 6HU (GB)**

(56) References cited:
**WO-A-02/16257**

• **REGEV ET AL: "Preparation of Conductive Nanotube-Polymer Composites using Latex Technology" ADVANCED MATERIALS, vol. 16, no. 3, 2004, page 248, XP002296333**
• **BARRAZA ET AL.: "SWNT-filled Thermoplastics and elastomeric Composites Prepared by Miniemulsion Polymerization" NANO LETTERS, vol. 2, no. 8, 2002, pages 797-802, XP002296334**
• **O'CONNELL M J ET AL: "Reversible water-solubilization of single-walled carbon nanotubes by polymer wrapping" CHEMICAL PHYSICS LETTERS, NORTH-HOLLAND, AMSTERDAM, NL, vol. 342, no. 3-4, 13 July 2001 (2001-07-13), pages 265-271, XP002207175 ISSN: 0009-2614**
• **DUFRESNE A ET AL: "Processing and characterization of carbon nanotube/poly (styrene-co-b utyl acrylate) nanocomposites" JOURNAL OF MATERIALS SCIENCE, CHAPMAN AND HALL LTD. LONDON, GB, vol. 37, no. 18, 2002, pages 3915-3923, XP002237221 ISSN: 0022-2461**

**Description**

**FIELD OF THE INVENTION**

This invention relates generally to composites comprising polymers and carbon nanotubes, and more particularly to conductive composites comprising polymers and single-wall carbon nanotubes.

**BACKGROUND OF THE INVENTION**

Single-wall carbon nanotubes (SWNT), commonly known as "buckytubes," have been the subject of intense research since their discovery due to their unique properties, including high strength, stiffness, and thermal and electrical conductivity. Single-wall carbon nanotubes are fullerenes consisting essentially of $sp^2$-hybridized carbon atoms typically arranged in hexagons and pentagons. For background information on single-wall carbon nanotubes see B.I. Yakobson and R. E. Smalley, American Scientist, 85 (July-August, 1997) pp. 324-337. Multi-wall carbon nanotubes are nested single-wall carbon cylinders and possess some properties similar to single-wall carbon nanotubes. Multi-wall carbon nanotubes (MWNT) have been shown to be moderately effective in enhancing the electrical conductivity of composites that comprise MWNT in a polymer matrix. (See, for example, S.A. Curran et al., Advanced Materials, 10 (1998) p. 1091; J.N. Coleman et al., Physical Review B, 58 (1998) p. R7492; Grimes et al., Chemical Physics Letters, 319 (2000) p. 460; and P. Fournet et al., Journal of Applied Physics, 90 (2001) p. 969.) However, since single-wall carbon nanotubes have fewer defects than multi-wall carbon nanotubes, the single-wall carbon nanotubes are generally stronger and more conductive, and are therefore expected to provide enhancement of both mechanical properties and electrical conductivity in polymer composites. Because the thermal conductivity of single-wall carbon nanotubes along their length is comparable to that of diamond, incorporation of single-wall carbon nanotubes into a composite is expected to provide enhanced thermal conductivity to the composite. (See Biercuk et al., Applied Physics Letters, 80 (2002) p. 2767).

Single-wall carbon nanotubes have substantial potential for enhancing the strength, elasticity, toughness, electrical conductivity and thermal conductivity of polymer composites, however incorporation of the nanotubes into composites has been complicated by the tendency for single-wall carbon nanotubes to aggregate and impair dispersion of the nanotubes. Generally, preparation of most polymer-single-wall-carbon composites has been directed to achieving a uniform SWNT dispersion in polymers using such methods as mechanical mixing, melt-blending, solvent blending, *in-situ* polymerization and combinations thereof. Generally homogenous aqueous dispersions of single-wall carbon nanotubes have been prepared by using certain water-soluble polymers that interact with the nanotubes to give the nanotubes solubility in aqueous systems. (See M. J. O'Connell et al., Chem. Phys. Lett. 342 (2001) p. 265) Such systems are described in International Patent Publication, WO 02/016257, published February 28, 2002, and incorporated herein by reference.

Conductive polymer composites containing carbon-based fillers are desired for their unique combination of metallic conductivity and polymer flexibility. Such conductive polymer composites are useful as materials for electromagnetic interference (EMI) shielding, heat dissipation films, paints, coatings, adhesives, chemical sensors, actuators, photoconductors, and impedance adapters for organic light emitting diodes (OLEDs). One carbon-based filler that has been used in polymer composites is carbon black. However, in order to achieve the desired electrical conductivity with carbon black, concentrations of more than 25 wt% are often needed in the polymer when processed by typical solution or melt-based techniques. High filler loadings, such as these, can result in processing difficulties and loss of polymer properties, such as flexibility.

The critical filler concentration needed to achieve true electrical conductivity is known as the percolation threshold. A need remains for a conductive polymer composite with a percolation threshold at a low critical filler concentration in order to retain polymer properties and processability, as well as provide a composite with effective conductive properties.

**SUMMARY OF THE INVENTION**

In a first aspect, there is provided a conductive carbon nanotube-polymer composite which comprises carbon nanotubes in an amount less than 1 wt.% of the composite, and polymer, wherein the polymer is in a form of coalesced polymer particles, wherein the carbon nanotubes are inhomogeneously dispersed at the microscopic level in the carbon nanotube-polymer composite, wherein the carbon nanotubes reside primarily between the polymer particles, and wherein the carbon nanotubes form an interconnecting network at the interface between at least some of the coalesced polymer particles. The network of carbon nanotubes in the carbon-nanotube polymer composite provides electrical and thermal conductivity to the composite. The carbon nanotubes can be single-wall carbon nanotubes, multi-wall carbon nanotubes or a combination thereof. The carbon nanotubes can be purified or unpurified.

In one embodiment, the composite can comprise a carbon nanotube stabilizer, a polymer particle stabilizer or both. The polymer particles can be provided by an emulsion, a latex, or any other polymer wherein polymer particles can be suspended by mechanical or chemical means, such as with a surfactant, protein, or water-soluble polymer. A suitable polymer for the matrix of the conductive carbon nanotube-polymer composite is poly(vinyl acetate), wherein polymer particles of poly(vinyl acetate) can be provided by an emulsion of poly(vinyl acetate).

In one embodiment, the conductive carbon nanotube-polymer composite comprises nanotubes in an amount less than about 0.1 wt% of the composite.

In another embodiment, the carbon nanotube-polymer composite also comprises a conductive filler, such as, but not limited to carbon black and small fullerenes, such as, $C_{60}$ (buckyballs), $C_{70}$, and $C_{84}$.

In another embodiment, the nanotube-polymer composite comprises single-wall carbon nanotubes, wherein the polymer is polyvinyl acetate, and wherein the nanotube-polymer composite has a percolation threshold of less than about 0.04 wt% single-wall carbon nanotubes in the composite.

The present invention provides a conductive carbon nanotube-polymer composite having electrical conductivity at a low carbon nanotube loading. The carbon nanotubes are inhomogeneously dispersed at the microscopic level in a polymer composite comprising coalesced polymer particles wherein the polymer particles essentially exclude the single-wall carbon nanotubes from the interior volume of the polymer particles, and wherein the nanotubes concentrate between at least some of the coalesced polymer particles to form a connective network through the carbon nanotube-polymer composite.

In a second aspect, there is provided a method for making a conductive carbon nanotube-polymer composite, comprising forming a carbon nanotube suspension comprising carbon nanotubes and a first solvent, mixing the carbon nanotube suspension and a polymer suspension, wherein the polymer suspension comprises a polymer and a second solvent, and wherein the polymer is in a form of polymer particles, to form a carbon nanotube-polymer suspension, and removing the first solvent and second solvent from the carbon nanotube-polymer suspension to form a carbon nanotube-polymer composite, wherein the polymer particles coalesce and the carbon nanotubes reside primarily between the polymer particles, wherein the carbon nanotubes are inhomogeneously dispersed at the microscopic level in the carbon nanotube-polymer composite, and wherein said composite comprises nanotubes in an amount less than 1 wt.% of the composite.

Another embodiment of the invention relates to a method for making a conductive carbon nanotube-polymer composite, comprising forming an aqueous nanotube suspension, mixing the nanotube suspension with an aqueous polymer suspension to form a carbon nanotube-polymer suspension, wherein the polymer is in a form of polymer particles and wherein the nanotubes are generally excluded from the interior of the polymer particles, and removing water from the carbon nanotube-polymer suspension to form a carbon nanotube-polymer composite, wherein the polymer particles coalesce and the carbon nanotubes primarily aggregate between at least some of the polymer particles. The nanotubes primarily aggregated in between the coalesced polymer particles form an interconnecting network and provide the polymer composite with thermal and electrical conductivity.

In other embodiments, the nanotube suspension, the polymer particle suspension, or both, are stabilized with a surfactant or water-soluble polymer. Suitable surfactants include, but are not limited to, anionic, cationic, nonionic and amphoteric surfactants, fatty acid soaps and proteins. An example of an effective surfactant for suspending nanotubes or polymer particles is sodium dodecyl sulfate. Suitable water-soluble polymers include, but are not limited to amphiphilic polymers, cellulosic polymers, polyelectrolytes, ionic polymers, acrylate polymers, acrylic acid polymers, copolymers thereof and combinations thereof. Examples of effective water-soluble polymers for suspending carbon nanotubes are Gum Arabic and poly(vinyl pyrrolidone). An example of an effective water-soluble polymer for suspending polymer particles is poly(vinyl alcohol).

In other embodiments, the polymer matrix for the nanotube-polymer composite is formed from a polymer particle suspension, wherein the polymer particle suspension can be a polymer emulsion or latex, wherein the polymer is in a form of generally spherical polymer particles, having a size in the range of about 0.01 micron to about 100 microns in any dimension. Suitable matrix polymers include poly(vinyl acetate), acrylate polymers, acrylic acid polymers, polyacrylic esters, polyacrylamides, polyacrylonitriles, chlorinated polymers, fluorinated polymers, styrenic polymers, polyurethanes, natural rubber, synthetic rubber polymers, copolymers and combinations thereof.

In another embodiment, the invention relates to a method for making a conductive carbon nanotube-polymer composite comprising forming a solvent-based carbon nanotube suspension, mixing the solvent-based carbon nanotube suspension and an aqueous polymer suspension, wherein the polymer is in a form of polymer particles, and wherein the nanotubes are generally excluded from the interior of the polymer particles, to form a carbon nanotube-polymer suspension, and removing water and solvent from the carbon nanotube-polymer suspension to form a carbon nanotube-polymer composite, wherein polymer particles coalesce and the carbon nanotubes aggregate primarily at the interface between at least some of the polymer particles.

The carbon nanotubes form an interconnecting network in the polymer composite to impart electrical and thermal conductivity to the composite.

## BRIEF DESCRIPTION OF THE DRAWINGS

**Figures 1A, 1B and 1C** illustrate stages in one embodiment of the present invention for making a conductive carbon nanotube-polymer composite. Figure 1A shows a dispersion of carbon nanotubes (lines) and polymer particles (circles)- Figure 1B shows the removal of some water from the dispersion of carbon nanotubes and polymer particles. Figure 1C shows the removal of more water, wherein the polymer particles coalesce with each other and the nanotubes aggregate and are entrapped between at least some of the polymer particles to form an interconnecting network of nanotubes in the composite.

**Figure 2** is a cryo-SEM (Scanning Electron Micrograph) of a polydisperse PVAc (poly(vinyl acetate)) emulsion having a solids content of about 55 wt% in water. The fracture process used to prepare the sample gives a flattened appearance to the generally spherical polymer particles.

**Figure 3A** is a TEM (Transmission Electron Micrograph) at 37,500X magnification of GA (Gum Arabic)-stabilized single-wall carbon nanotubes.

**Figure 3B** is a TEM at 200,000X magnification of GA-stabilized single-wall carbon nanotubes.

**Figure 4A** is a TEM at 10,000X magnification of a 3 wt% SWNT-PVAc composite film, prepared from a PVAc emulsion. The PVAc polymer particles (gray) are generally spherical and approximately 1-2 microns wide. The sinuous forms (black) between some of the particles are unpurified single-wall carbon nanotubes.

**Figure 4B** is a TEM micrograph at 27,OOOX magnification of a 3 wt% SWNT-PVAc composite film prepared from a PVAc emulsion.

**Figure 5A** is a plot of electrical conductivity as a function of SWNT concentration in the composite for GA-stabilized SWNT-PVAc composite films. The solid curve is fit to the data using the percolation power law.

**Figure 5B** gives electrical conductivity plots as a function of carbon filler concentration in the composite for SWNT-PVAc and carbon black-PVAc composites prepared according to Examples 1 and 2, respectively.

## DETAILED DESCRIPTION OF SPECIFIC EMBODIMENTS

The following terms are defined as follows:

Copolymer: A polymer having more than one different monomer, such as terpolymers and tetrapolymers. Copolymers can be linear or branched and include random, alternating, graft and block copolymers. For clarity and conciseness, the term "polymer" will be used to include homopolymers, copolymers and other polymers having more than one different monomer.

Polymer solution: A polymer solution comprising a polymer in an aqueous medium or a polymer in a solvent medium, wherein the polymer is generally in non-particulate form.

Water-soluble polymer: A polymer or copolymer that is generally water soluble. A water-soluble polymer may have some fraction of polymer in solution and some fraction in particulate or aggregate form, wherein the amount of polymer in solution and the amount of polymer in particulate form is dependent on the polymer concentration, liquid medium and ambient conditions.

Polymer dispersion: Polymer particles, generally in the range of about colloidal size to about 1000 microns, distributed in a medium.

Water-dispersible polymer: A polymer dispersible or suspendable in an aqueous medium, such as a polymer suspension or emulsion. The polymer is generally in the form of small particles that are in a suspension or dispersion that is stable or unstable, i.e. the polymer may be temporarily suspended by agitation.

Water-based polymer: A polymer that can be dispersed, suspended, emulsified or solubilized in an aqueous environment.

Polymer Suspension: A dispersion of solid polymer particles in a liquid medium, i.e. in an aqueous medium or solvent. The suspension may be stable for a long period of time or a short-lived suspension, i.e. stable or unstable. The suspension may be created and maintained by agitation.

Polymer Colloidal Suspension: A suspension or dispersion of solid polymer particles of a colloidal size. A polymer colloidal suspension is usually stable.

Polymer Emulsion: A dispersion of solid polymer particles, aggregates or particulates in a liquid state, generally an aqueous environment. The polymer particles can be of a colloidal size or larger, depending on the particular polymer type and the constituency of the liquid environment. The polymer particles in the emulsion can be stabilized by colloidal particles. An emulsion can be formed by mechanical agitation or by chemical processes. The emulsion can be stable or unstable (i.e. An unstable emulsion will separate in time depending on temperature and conditions.)

Polymer colloidal dispersion: A dispersion of polymer particles of colloidal size in a liquid medium. The colloidal dispersion may contain hydrophobic colloids or hydrophilic colloids or a mixture of both.

Colloidal particle size: A particle size of about 0.01 micron to about I micron in any dimension. Dispersions in which the particle size is in the colloidal range are colloidal emulsions or colloidal suspensions.

Latex: A polymer emulsion or sol in which each polymer particle contains a number of macromolecules. The particle size is generally colloidal and the liquid state is generally aqueous.

Polyelectrolyte: A macromolecular substance which, on dissolving in water or another ionizing solvent, dissociates to give polyions (multiply charged polycations or polyanions) together with an equivalent amount of ions of small charge and opposite sign. Polyelectrolytes dissociating into polycations and polyanions, with no ions of small charge, are also possible. A polyelectrolyte can be a polyacid, a polybase, a polysalt or a polyampholyte. A polyelectrolyte can be considered colloidal if at least one of the ions is of colloidal size.

Stabilization: Stabilization of carbon nanotubes and/or polymer particles refers to mechanical means or chemical means for keeping the nanotubes and/or polymer particles physically suspended in a medium for a period of time. Mechanical means for stabilization include, but not limited to, stirring and other agitation techniques. Chemical means include chemical species that promote the suspension of the nanotubes and/or polymer particles, such as, but not limited to, various appropriate surfactants and polymers.

Electrical Conductivity: Electrical conductivity shall be defined as at least about $10^{-9}$ S/cm (Siemens/cm).

Percolation Threshold: The concentration of a conductive filler in a composite material where the composite material comprising the conductive filler transitions from an insulator to an electrical conductor.

In one embodiment, the invention relates to a conductive carbon nanotube-polymer composite having electrical conductivity at a low carbon nanotube concentration or percolation threshold. In preparing most carbon nanotube-polymer composites, the objective has been to achieve a homogeneous dispersion of the nanotubes in the polymer matrix. In order to disperse the nanotubes in the polymer matrix, melt blending and solvent-blending techniques have often been used to provide a fine dispersion both at the macroscopic and microscopic level. Hydrocarbon-based solvents in solvent-blending methods have also often been used to provide compatibility with a polymer matrix system.

However, in contrast to previous methods, conductivity in the composite in some embodiments of the present invention is achieved by seeking a generally homogeneous dispersion at the macroscopic level with an inhomogeneous dispersion of nanotubes at the microscopic level. Also, in contrast to conventional solvent and polymer melt blending techniques, a nanotube dispersion in one embodiment of the present invention is sought and prepared using the extremely hydrophobic nanotubes in an aqueous environment. In some embodiments of the present invention, a connective network of nanotubes is formed by mixing a nanotube suspension with a suspension of polymer particles, wherein the polymer particles substantially exclude the nanotubes from the interior of the polymer particles. To form the composite, water is removed from the nanotube-polymer mixture. As water is removed, the polymer particles coalesce with each other, trapping and aggregating the nanotubes in the interstitial regions between at least some of the coalesced polymer particles generally toward the outer edges of the polymer particles. The resulting composite comprises carbon nanotubes that are dispersed in the polymer composite generally homogeneously at the macroscopic level and inhomogeneously at the microscopic level and form a connective network through the nanotube-polymer composite that branches in between at least some of the coalesced polymer particles.

Another embodiment, in accordance with the first aspect of the invention, relates to a polymer composite comprising single-wall carbon nanotubes and a polymer, wherein the polymer composite comprises coalesced polymer particles and single-wall carbon nanotubes, wherein the single-wall carbon nanotubes primarily reside between at least some of the coalesced polymer particles and form a conductive network through the nanotube-polymer composite.

Another embodiment, in accordance with the second aspect of the invention relates, to a method for making a conductive carbon nanotube-polymer composite, comprising forming an aqueous nanotube suspension comprising carbon nanotubes and water, mixing the nanotube suspension with an aqueous polymer suspension comprising polymer in the form of polymer particles and water to form a carbon nanotube-polymer suspension, wherein the nanotubes are generally excluded from the interior of the polymer particles, and removing water from the carbon nanotube-polymer suspension to form a carbon nanotube-polymer composite, wherein the polymer particles coalesce and the carbon nanotubes are trapped and aggregate primarily between at least some of the polymer particles and wherein the carbon nanotubes form a interconnecting network in the nanotube-polymer composite, the network of which provides electrical and thermal conductivity to the composite.

The carbon nanotubes can be single-wall carbon nanotubes, multi-wall carbon nanotubes or a combination thereof. The nanotubes can be made by any known process for making carbon nanotubes, however, the composition of the nanotube material can influence the conductivity of the nanotube-polymer composite. For example, a nanotube material having more single-wall carbon nanotubes with respect to multi-wall carbon nanotubes and amorphous carbon, would be more conductive than a nanotube material with a lower concentration of single-wall carbon nanotubes in a similar mixture of multi-wall carbon nanotubes and amorphous carbon. Typically, the carbon nanotube material comprises primarily single-wall carbon nanotubes (i.e. greater than 50 wt% of the carbon-containing material), preferably greater than 70 wt% of the carbon-containing material.

Single-wall carbon nanotubes can be made from any known means, such as by gas-phase synthesis from high temperature, high pressure carbon monoxide, catalytic vapor deposition using carbon-containing feedstocks and metal catalyst particles, laser ablation, arc method, or any other method for synthesizing single-wall carbon nanotubes. Single-wall carbon nanotubes obtained from synthesis are generally in the form of carbon nanotube powder. Depending on the operating conditions, some multi-wall carbon nanotubes may be produced with the single-wall carbon nanotubes and be present in the carbon nanotube powder. Even if some multi-wall carbon nanotubes are present in the carbon nanotube powder, if the carbon nanotube material is mostly single-wall carbon nanotubes (i.e. the single-wall carbon nanotubes are present in a concentration greater than 50 wt% of the total carbon nanotubes), then the material will be regarded as single-wall carbon nanotube material or powder.

In one embodiment, single-wall carbon nanotube powder is purified to remove non-nanotube carbon, such as amorphous carbon and metallic catalyst residues. Metals, such as Group VIB and/or VIIIB, are possible catalysts for the synthesis of single-wall carbon nanotubes. After catalysis, the metallic residues may be encapsulated in non-nanotube carbon, such as graphitic shells of carbon. The metallic impurities may also be oxidized through contact with air or by oxidation of the non-nanotube carbon during purification.

The carbon nanotubes can be used as-produced or after purification. Purification can be done by any known means. Procedures for purification of single-wall carbon nanotubes are related in International Patent Publications "Process for Purifying Single-Wall Carbon Nanotubes and Compositions Thereof," WO 02/064,869, published August 22, 2002, and "Gas Phase Process for Purifying Single-Wall Carbon Nanotubes and Compositions Thereof," WO 02/064,868 published, August 22, 2002, and incorporated herein in their entirety by reference. In one embodiment, the nanotubes are purified by heating at 250°C in air saturated with water vapor. The heating is done for a length of time so as to oxidize at least some of the non-nanotube carbon, and, may, to some extent, oxidize the metal impurities. The oxidation temperature can be in the range of 200°C and about 400°C, preferably about 200°C to about 300°C. The oxidation can be conducted in any gaseous oxidative environment, which can comprise oxidative gases, such as oxygen, air, carbon dioxide, and combinations thereof. The concentration of the oxidative gases can be adjusted and controlled by blending with nitrogen, an inert gas, such as argon, or combinations thereof. The duration of the oxidation process can range from a few minutes to days, depending on the oxidant, its concentration, and the oxidation temperature. After oxidatively heating the nanotubes, the nanotubes are treated with acid to remove metallic impurities. In one embodiment, the nanotubes are slurried in the acid, which can be a mineral acid, an organic acid, or combinations thereof. Examples of acids that could be used to treat and slurry the nanotubes include, but are not limited to, hydrochloric acid, hydrofluoric acid, hydrobromic acid, hydroiodic acid, sulfuric acid, oleum, nitric acid, citric acid, oxalic acid, chlorosulfonic acid, phosphoric acid, trifluoromethane sulfonic acid, glacial acetic acid, monobasic organic acids, dibasic organic acids, and combinations thereof. The acid used can be a pure acid or diluted with a liquid medium, such as an aqueous and/or organic solvent. Generally, an aqueous solvent is preferred. Concentrated aqueous hydrochloric acid is preferred for removing metallic impurities. After acid treating, the acid and impurities are removed from the nanotubes by rinsing. The nanotubes can be rinsed with water, an organic solvent or a combination thereof.

A carbon nanotube suspension can be made in an aqueous environment using mechanical means, such as high shear mixing or sonication. Such a suspension would be unstable, in that the extremely hydrophobic nanotubes would settle out fairly rapidly. Although it is possible to use an unstable suspension of nanotubes in the present invention, a more stable suspension of nanotubes can be achieved with the use of a stabilizer.

Without functionalization or modification, SWNT are extremely hydrophobic. Other means to suspend carbon nanotubes include, but are not limited to, functionalization with other chemical moieties or physical modification, such as cutting. However, chemical functionalization can often compromise nanotube conductivity. For example, the conductivity of single-wall carbon nanotubes is reduced as a function of the amount of sidewall functionalization and the electron-withdrawing nature of the sidegroup. The more electron withdrawing the sidewall functionalization, the more the conductivity of the single-wall carbon nanotubes can decrease. Any chemical moiety that impedes electron flow along the nanotube axis can impair nanotube conductivity. Physical cutting of the nanotubes can also affect nanotube conductivity in a composite since the ability for the nanotubes to make a connective network throughout the composite can be impaired, at least in part by the smaller aspect ratio of the cut nanotubes.

In another embodiment, the carbon nanotube-polymer composite further comprises a conductive filler, such as, but not limited to, carbon black and small fullerenes, $C_{60}$ (buckyballs), $C_{70}$, $C_{84}$ or combinations thereof. In this embodiment, the carbon nanotubes are mixed with one or more conductive fillers and suspended. For clarity and conciseness, with or without the one or more conductive materials, a mixture of conductive material and nanotubes will be collectively referred to as the nanotubes or nanotube material.

Stabilizers can improve the stability of a carbon nanotube suspension and suitable stabilizers include, but are not limited to, surfactants, proteins and water-soluble polymers.

Satisfactory surfactants useful herein can readily be identified in well-known sources such as McCutcheon's Detergents & Emulsifiers. Suitable surfactants include, but are not limited to one or more surfactants selected from the group consisting of cationic surfactants, anionic surfactants, amphoteric surfactants, and nonionic surfactants, and mixtures thereof.

Anionic surfactants include in particular organosulfonates and organosulfates, which can be characterized by the formula $X^1$-$A^1$ wherein $A^1$ denotes sulfonate or sulfate, attached anywhere to $X^1$ and most often at one end of $X^1$, and $X^1$ denotes:

alkyl containing 6 to 40 carbon atoms, optionally substituted with 1 to 10 hydroxyl groups, and optionally substituted with aryl (particularly phenyl) which is optionally substituted with one or more alkyl or alkylene groups containing 1 to 20 carbon atoms and up to 3 carbon-carbon double bonds;

alkylene containing 6 to 40 carbon atoms and 1 to 6 carbon-carbon bonds, and optionally substituted with 1 to 10 hydroxyl groups, and optionally substituted with aryl (particularly phenyl) which is optionally substituted with one or more alkyl or alkylene groups containing 1 to 20 carbon atoms and up to 3 carbon-carbon double bonds;

amides and esters containing a total of 6 to 50 carbon atoms and optionally containing 1 to 6 carbon-carbon double bonds;

polyalkoxy segments, particularly homopolymers, random copolymers, and block copolymers, of ethylene oxide and/or propylene oxide, containing 2 to 200 alkoxy units, per se or terminated with alkyl or alkylene containing 2 to 40 carbon atoms, which may optionally be substituted with 1-10 hydroxyl groups, or terminated with aryl (particularly phenyl) which may optionally be substituted with one or more alkyl or alkylene groups containing 1 to 20 carbon atoms and up to 3 carbon-carbon double bonds.

The anionic component is counterbalanced by a cation X which is preferably an alkali metal (e.g., sodium, potassium or lithium).

Cationic surfactants include quaternary ammonium compounds, particularly those of the formula

$$(Q^1)(Q^2)N^+(Q^3)(Q^4)\text{-}(An)^-$$

wherein $(An)^-$ is an anion such as halide (especially bromide or chloride); methylsulfate, or ethylsulfate, and $Q^1$, $Q^2$, $Q^3$ and $Q^4$ are selected such that 2 or 3 thereof are $C_{1\text{-}4}$ alkyl (optionally one of which is benzyl) and I or 2 thereof are alkyl or alkylene containing 8 to 24 carbon atoms and optionally up to 3 carbon-carbon double bonds, or poly(alkoxy) wherein each alkoxy unit is ethoxy or propoxy, containing up to 200 alkoxy units. Also included are polymeric quaternary ammonium salts including those known generically as polyquaternium -1, -2, -4, -5, -6, -7, -8, -9, -10, -11, -12, -13, and -14.

Amphoteric surfactants particularly include those of the formulas (I) and (II)

$$R^4\text{--}(OC_3H_6)_{0\text{-}1}(C(O)NH(CH_2)_{1\text{-}3})_{0\text{-}1}\text{--}N(Z^1)(Z^2)_{0\text{-}1}\text{-}ZCOOH \qquad (I)$$

$$R^4\text{--}(OC_3H_6)_{0\text{-}1}(C(O)NH(CH_2)_{1\text{-}3})_{0\text{-}1}\text{--}N(Z^1)(Z^2)_{0\text{-}1}\text{--}ZSO_3H \qquad (II)$$

salts thereof with an alkali metal X or ammonium cation and mixtures of any the compounds and salts, wherein X is as defined above, $R^4$ is straight or branched alkyl or alkylene, or cyclic or heterocyclic aromatic, which is optionally substituted with alkyl, and contains 4 to 40 carbon atoms and 0-3 carbon-carbon double bonds, $Z^1$ and $Z^2$ are independently of each other H, $C_f H_{f+1}$ or $C_f H_{2f} OH$ wherein f is 1 to 6 or, in formula (I), one of $Z^1$ and $Z^2$ can be --ZCOOH or --ZCOOX, and Z is $(CH_2)_f$, $CH_2CH_2OCH_2$, or $CH_2CHOHCH_2$;

Formulas (I) and (II) embrace betaines, sulfobetaines (sultaines), glycinates and propionates, which are commercially available and/or can readily be synthesized. Examples of preferred amphoteric surfactants include fatty betaines such as lauryl dimethyl betaine, such as REWOTERIC® AM-DML-35, (REWOTERIC is registered trademark of Witco Corp.) and N-lauryl β-iminopropionic acid, mono-sodium salt (e.g., REWOTERIC AM-LP); glycinates such as N-cocoylamidoethyl-N-(2-hydroxyethyl)-N-carboxymethyl glycine, sodium salt (e.g., REWOTERIC AM-2C-W) and as lauryl hydroxy sultaine (e.g., REWOTERIC-AM-B-15); propionates such as sodium cocoamphopropionate (e.g., REWOTERIC AM-KSF40); and sulfobetaines such as lauryl hydroxy sultaine (e.g., REWOTERIC AM-CAS).

Suitable $R^4$ groups include alkyl and alkylene radicals derived from fatty acids. Other $R^4$ groups include benzyl and alkyl-substituted benzyl.

Nonionic surfactants include any nonionic compounds having surface active capability. Examples include:

esters, amides, and alkanolamides, containing a total of 6 to 40 carbon atoms, optionally zero to 3 carbon-carbon double bonds and optionally substituted with 1 to 20 hydroxyl groups (as, e.g., polyglycol) esters;

homopolymers, random copolymers and block copolymers of ethylene oxide and/or propylene oxide and/or ethylene glycol and/or propylene glycol, containing 2 to 200 repeating units;

any of the foregoing homopolymers, random copolymers and/or block copolymers, but especially poly(ethylene oxide), substituted with alkyl or alkylene containing 1 to 40 carbon atoms and optionally up to 6 carbon-carbon double bonds, and optionally 1 to 20 hydroxyl groups, or with an ester, amide, amine, alkanolamide or with an aryl group (especially phenyl) or an aryl-alkyl group, itself optionally substituted with alkyl or alkylene containing up to 40 carbon atoms and optionally containing 6 carbon-carbon double bonds; and

sorbitol derivatives, including those known generically as polysorbate -20, -32, -40, -60, -61, -65, -80, - 81, and -85.

Examples of suitable surfactants for stabilizing nanotube suspensions, include, but are not limited to, anionic surfactants, such as sodium dodecylsulfate, sodium lauryl sulfate, sodium oleyl sulfate, sodium dodecylsulfonate, sodium dodecylbenzenesulfonate, sodium n-lauroylsarcosinate, sodium alkyl allyl sulfosuccinate, and the sodium salt of poly (styrene sulfonate), cationic surfactants, such as dodecyltrimethylammonium bromide and ceytltrimethylammonium bromide, fatty acid soaps, nonionic surfactants, such as TRITON X® surfactants, e.g. TRITON X-100, X-114, and X-405, (TRITON is a registered trademark of Rohm & Haas Corporation.), BRIJ® surfactants, e.g. BRIJ 78 and BRIJ 700 (BRIJ is a registered trademark of Atlas Chemical Company.), PEO-PPO-PEO (polyethylene oxide-polypropylene oxide-polyethylene oxide) triblock polymer PLURONIC® surfactants, e.g. PLURONIC P-103, P-104, P-105, F-108, F-98, F-68, F-127, F-87, F-127, F-87, F-77 and F-85, (PLURONIC® is a registered trademark of BASF Corporation.), TWEEN® surfactants, e.g. TWEEN 20, 40, 60, 80 and 85. (TWEEN is a registered trademark of Atlas Chemical Company.), and PEO-PBO-PEO (polyethylene oxide-polybutylene oxide-polyethylene oxide) triblock polymer.

Water-soluble polymers can also be used to stabilize a suspension of carbon nanotubes in an aqueous environment. Suitable water-soluble polymers are polymers that form polymer solutions in water. The water solubility of a particular polymer depends on a number of factors, including, but not limited to, polymer composition, polymer molecular weight, the critical concentration of the polymer, temperature and pressure. The critical concentration ($c_{crit}$) of the polymer is the highest concentration where polymer coils can still reach their maximum extension in volume. Generally, preferred carbon nanotube stabilizers are water-soluble polymers that can form true solutions in water, rather than suspensions of polymer particulates. Thus, although these water-soluble polymers may be available in particulate form at certain concentrations and polymer molecular weight, the preferred water-soluble polymer for stabilizing the nanotube suspension is at a concentration in the aqueous media where the polymer is generally in the form of individual extended polymer chains.

Suitable water-soluble polymers for stabilization of the nanotube suspension include, but are not limited to, amphiphilic polymers, also called polymer surfactants, which contain both hydrophobic and hydrophilic segments, cellulosic polymers, polyelectrolytes, ionic polymers, acrylate polymers, acrylic acid polymers, copolymers thereof and combinations thereof. Suitable specific water-soluble polymers include, but are not limited to, Gum Arabic, poly(vinyl pyrrolidone), poly(vinyl alcohol), poly(acrylic acid), poly(methacrylic acid), sodium polyacrylate, polyacrylamide, poly (ethylene oxide), polyethylene glycol, poly(ethylene formamide), polyhydroxyether, poly(vinyl oxazolidinone), methyl cellulose, ethyl cellulose, carboxymethyl cellulose, ethyl(hydroxyethyl)cellulose, sodium polyacrylate, copolymers thereof, and combinations thereof. Other suitable water-soluble polymers for stabilizing aqueous nanotube suspensions include, but are not limited to, polystyrene sulfonate (PSS), poly(1-vinyl pyrrolidone-co-vinyl acetate), poly(1-vinyl pyrrolidone-co-acrylic acid), poly(1-vinyl pyrrolidone-co-dimethylaminoethyl methacrylate), polyvinyl sulfate, poly(sodium styrene sulfonic acid-co-maleic acid), dextran, dextran sulfate, gelatin, bovine serum albumin, poly(methyl methacrylate-co-ethyl acrylate), polyallyl amine, and combinations thereof. Preferable water-soluble polymers for stabilizing aqueous carbon nanotube suspensions are Gum Arabic (GA) and poly(vinyl pyrrolidone), more preferably Gum Arabic.

The particular selection of the type of stabilizer, such as the type of surfactant or water-soluble polymer, and the particular compound selected, for any given application can be made by those of ordinary skill in this art with reference to the intended application and the desired properties of the final product. Typically, the amount of stabilizer can range from about 5 wt% to about 200 wt% of the weight of the nanotubes. Preferably the amount of stabilizer is in the range of about 20 wt% and about 50 wt% of the weight of the nanotubes.

Mechanical means can be used to suspend the nanotubes, with or without a stabilizer. Suitable mechanical means include, but are not limited to, high speed impeller mixing, high shear mixing and sonication. Heat can also be applied to facilitate nanotube suspension.

The main component of the conductive polymer composite is known as the polymer matrix. In one embodiment of the present invention, the polymer matrix is formed from a polymer in the form of polymer particles suspended in an aqueous system, such as a polymer emulsion or latex. The polymer particles are preferably able to coalesce as moisture is removed from the water-based suspension. Suitable polymers include, but are not limited to, acrylate polymers, acrylic acid polymers, polyacrylic esters, polyacrylamides, polyacrylonitriles, chlorinated polymers, fluorinated polymers, styrenic polymers, polyurethanes, natural rubber, synthetic rubber polymers, vinylchloride-acrylate polymers, copolymers thereof and combinations thereof. Some examples of specific suitable polymers, include, but are not limited to, poly(vinyl acetate), poly(acrylic acid), poly(methyl methacrylate), polyacrylamide, polyacrylonitrile, polyvinylpropionate, polystyrene, polytetrafluoroethylene, poly(vinyl chloride), poly(vinylidene chloride), poly(vinyl chloride-ethylene), poly(vinyl chloride-propylene), poly(styrene-co-butadiene), styrene-acrylate copolymers, ethylene-vinyl chloride copolymer, poly(vinyl acetate-acrylate), poly(vinyl acetate-ethylene) and combinations thereof. Preferably, the polymer comprises poly(vinyl acetate) or poly(vinyl acetate) copolymer. Preferably, the polymer particles are in the form of a polymer emulsion or latex.

The suspension of the polymer particles can be stable or unstable. Preferably, the polymer particle suspension is stable. An example of an unstable polymer suspension is one in which the polymer particles settle out in a relatively short time, e.g. within an hour. An unstable suspension can be stabilized by mechanical means, such as by stirring, high shear mixing or sonication, to keep the polymer particles suspended for a period of time effective to add and mix with the nanotube suspension, so that the polymer particles and the nanotubes are dispersed fairly homogeneously at the macroscopic level throughout the liquid phase.

An aqueous suspension of polymer particles can also comprise a stabilizer for the polymer particles. Examples of polymer particle stabilizers, include, but are not limited to surfactants and polymers.

Surfactants for polymer particle stabilization can be cationic, anionic, nonionic or amphoteric. Generally, the type of surfactant is dependent on the type of polymer and the polymerization process used. Any of the surfactants listed above for nanotubes can be used for polymer particle stabilization. Examples of anionic surfactants for polymer particle stabilization include, but are not limited to, alkyl sulfates, such as sodium lauryl sulfate, ammonium lauryl sulfate, sodium isotridecyl sulfate, sodium dodecyl sulfate, sodium octyl sulfate, sodium cetyl stearyl sulfate, and sodium oleyl sulfate, alkyl ether sulfates, such as sodium lauryl ether sulfate, alkyl phenol ether sulfates, such as sodium nonyl phenol ether sulfate, salts and free acids of phosphate esters, sulfosuccinates, such as sodium sulfosuccinate alcohol ethoxylate, sodium sulfosuccinate alkyl phenol ethoxylate, sodium dicyclohexyl sulfosuccinate, and sodium dioctyl sulfosuccinate. Examples of nonionic surfactants for polymer particle stabilization include, but are not limited to, alkyl ethoxylates, alkyl ethoxylate blends and alkyl phenol ethoxylates. Fatty acid soaps and proteins can also be used to stabilize polymer particles. For example, rubber particles in natural rubber latex, which comes from the sap of the Hevea Brasiliensis tree, can be stabilized in a water-based system by proteins and fatty acid soaps.

The polymer particles can also be stabilized with one or more water-soluble polymers. The water-soluble polymer for stabilizing the polymer particles can be the same or different than the water-soluble polymer used to stabilize the nanotube suspension.

Suitable water-soluble polymers for stabilizing polymer particle suspensions include, but are not limited to, amphiphilic polymers, also called polymer surfactants and which contain both hydrophobic and hydrophilic segments, cellulosic polymers, polyelectrolytes, ionic polymers, acrylate polymers, acrylic acid polymers, copolymers thereof and combinations thereof. Suitable specific water-soluble polymers include, but are not limited to, Gum Arabic, poly(vinyl pyrrolidone), poly(vinyl alcohol), poly(acrylic acid), poly(methacrylic acid), sodium polyacrylate, polyacrylamide, poly (ethylene oxide), polyethylene glycol, poly (ethylene formamide), polyhydroxyether, poly(vinyl oxazolidinone), methyl cellulose, ethyl cellulose, carboxymethyl cellulose, ethyl(hydroxyethyl)cellulose, sodium polyacrylate, copolymers thereof, and combinations thereof. Other suitable water-soluble polymers for stabilizing aqueous polymer particle suspensions include, but are not limited to, polystyrene sulfonate (PSS), poly(1-vinyl pyrrolidone-co-vinyl acetate), poly(1-vinyl pyrrolidone-co-acrylic acid), poly(1-vinyl pyrrolidone-co-dimethylaminoethyl methacrylate), polyvinyl sulfate, poly(sodium styrene sulfonic acid-co-maleic acid), dextran, dextran sulfate, gelatin, bovine serum albumin, poly(methyl methacrylate-co-ethyl acrylate), polyallyl amine, and combinations thereof. A preferable water-soluble polymer for stabilizing a poly (vinyl acetate) suspension is polyvinyl alcohol.

The nanotube suspension is mixed with the polymer particle suspension. The mixing can be optionally accompanied by heating. Water is then removed to form a nanotube-polymer composite. Water can be removed by evaporation or desiccation and facilitated by application of vacuum and/or heat. As the water evaporates from the nanotube-polymer suspension, the polymer particles coalesce, and since the nanotubes are essentially excluded from the interior of the polymer particles, the nanotubes are trapped and aggregate between at least some of the polymer particles in the interstitial region. The trapped nanotubes form an interconnecting network of nanotubes in the polymer matrix, wherein the nanotube network provides the composite with electrical and thermal conductivity.

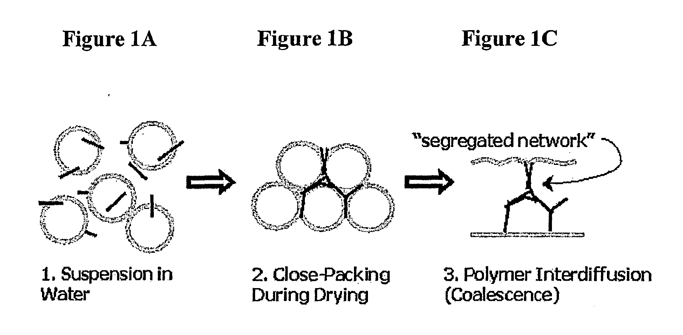

Without being bound by theory, the steps in the formation of the nanotube-polymer composite in one embodiment of the present invention is illustrated in Figures 1A, 1B and 1C. Figure 1A shows a dispersion of nanotubes (straight lines) and polymer particles (circles) in an aqueous media wherein the dispersion is generally homogeneous at the macroscopic level. Figure 1B shows that when water is removed, the polymer particles becoming more close-packed and the nanotubes aggregate and become trapped in the interstitial spaces between at least a portion of the polymer particles. Figure 1 C shows the coalescence of the polymer particles to form a coherent composite film with the carbon nanotubes aggregated at the interface between at least some of the coalesed polymer particles wherein the nanotubes form a conductive interconnecting network throughout the polymer composite. Since the single-wall carbon nanotubes generally reside between the particles of the matrix polymer, they are only present in a small fraction of the volume of the polymer matrix and are concentrated in the interstitial region between the polymer particles. When in contact with each other, single-wall carbon nanotubes have the propensity, to be hold strongly together by van der Waals forces, and, thus, form networks that generally are difficult to separate into individual nanotubes.

The particular stabilizer used to stabilize the nanotube suspension can affect the conductivity of the nanotube-polymer composite. For example, when poly(vinyl pyrrolidone) (PVP) is used as a stabilizer for single-well carbon nanotubes, the polymer can wrap around and coat individual nanotubes and, to some extent, ropes of single-wall carbon nanotubes. (See M. O'Connell, et al., Chem. Phys. Lett. 342 (2001) p. 265-271). PVP is a very good stabilizer for single-wall carbon nanotubes in aqueous systems. However, in a PVP-stabilized nanotube-polymer composite, where the polymer is poly(vinyl acetate), the conductivity of the composite is lower than a comparably-made composite, where the nanotube stabilize is Gum Arabic- Gum Arabic, a water-soluble polysaccharide produced by Acacia Senegal trees, also appears to be a very good stabilizer for carbon nanotubes, both single-wall and multiwall. (For information on GA-stabilized SWNT, see R. Bandyopadhyaya, et al., Nano Lett., 2 (2002) p. 25.) Although not meant to be held by theory, conductivity differences in stabilized-manotube-polymer composites may by due the extent the nanotube stabilizer coats the nanotubes, whereby such coating can separate the nanotubes to an extent that affects the interconnections in the nanotube network and the derived conductivity.

In any case, in the present invention provides a conductive polymer composite wherein conductivity is achieved with very low concentrations of carbon nanotubes, i.e. at low percolation thresholds of carbon nanotubes. The amount of carbon nanotubes needed to provide a level of electrical conductivity, i.e. the percolation threshold, is significantly lower in the present invention than when a composite is prepared with a generally (macroscopically and microscopically) uniform dispersion of carbon nanotubes.

In one embodiment, the invention comprises a conductive carbon nanotube-polymer composite, wherein the polymer is polyvinyl acetate, wherein the nanotubes are single-wall carbon nanotubes stabilized with Gum Arabic (GA), and wherein the nanotube-polymer composite has a percolation threshold of less than about 0.04 wt% single-wall carbon nanotubes in the composite.

When the carbon nanotubes are stabilized with a comparable amount of PVP, the percolation threshold is about 3 wt% to about 3.5 wt% SWNT in the composite.

The polymer particles for forming the polymer matrix of the nanotube-polymer composite are generally spherical and have a cross-sectional dimension generally in the range of about colloidal particle size, i.e. about 0.01 micron to about 1 micron, to coarser sizes up to about 100 microns, in any dimension. Generally, suitable polymer particles range in size from about 0.1 micron to about 10 microns in any dimension, typically about 0.5 micron to about 5 microns in any dimension. The nanotube network provides electrical and thermal conductivity to the composite. Because the polymer particles occupy a volume in the composite wherein the nanotubes are essentially excluded, the composite is conductive and has a percolation threshold at very low carbon nanotube loadings, for example as low as about 0.01 wt% to about 0.04 wt% nanotubes in the composite.

In the coalescing of the polymer particles, the nanotubes become entrapped between at least some of the coalescing polymer particles. As the liquid medium is removed and the polymer particles coalesce, the entrapped nanotubes become enveloped with polymer at the outer edges of the matrix polymer particles. In one embodiment, the matrix polymer particles, which generally exclude nanotubes from their polymer-occupied interior so that the nanotubes reside primarily between the polymer particles, exclude nanotubes from more than 50 vol% of the composite material. For the nanotubes to reside primarily between or, in the alternative, be substantially excluded from the polymer particles, the nanotubes would be excluded from at least about 50 vol% of the composite material. Preferably, the polymer particles exclude the nanotubes from more than 60 vol% of the composite, more preferably the polymer particles exclude the nanotubes from more than 70 vol% of the composite, more preferably the polymer particles exclude the nanotubes from more than 80 vol% of the composite, more preferably the polymer particles exclude the nanotubes from more than 90 vol% of the composite, more preferably the polymer particles exclude the nanotubes from more than 95 vol% of the composite, more preferably the polymer particles exclude the nanotubes from more than 99 vol% of the composite. Generally, a lower concentration of nanotubes is needed to form conductive networks in a polymer matrix made with polymer particles that exclude the nanotubes from a larger volume of the composite matrix. The concentration of nanotubes needed to form a conductive network with nanotube-excluding polymer particles is substantially less than if the nanotubes were uniformly dispersed throughout the entire polymer composite.

Single-wall carbon nanotubes in a concentration range from about 0.01 wt% to about 20 wt% of the dried polymer matrix material can be incorporated into a nanotube-polymer composite. Generally, the amount of nanotubes in the nanotube-polymer composite is sufficient to achieve electrical and thermal conductivity, but desirably small, so as to retain the mechanical and processing properties of the polymer. According to the present invention, the nanotube material is less than about 1 wt% of the polymer matrix material, and more preferably less than about 0.1 wt% of the polymer matrix material.

The amount of branching in the nanotube connective network is a function of the size distribution of the polymer particles, i.e. larger polymer particles would generally provide for a less branched network in a nanotube network and, conversely, smaller polymer particles would generally provide for a more branched network of the nanotubes throughout the composite.

The polymer particle size distribution may be monodisperse, i.e. all about the same particle size, or polydisperse, i.e. present as various particle sizes or distribution of particle sizes. The polymer particles can comprise ordered polymer structures, such as, but not limited to, lamella, micelles and/or crystalline-packed polymers.

The particular polymer and associated molecular weight will depend on the desired end-use application. The polymer molecular weights can range from between about 4,000 or 5,000 g/mole to over 1,000,000 g/mole.

In another embodiment, a conductive carbon nanotube-polymer composite can be made by forming a solvent-based carbon nanotube suspension, mixing the carbon nanotube suspension and an aqueous polymer suspension, wherein the polymer is in a form of polymer particles, to form an carbon nanotube-polymer suspension, and removing water and solvent from the carbon nanotube-polymer suspension to form a carbon nanotube-polymer composite, wherein polymer particles coalesce and the carbon nanotubes reside primarily between the polymer particles. In this embodiment, the nanotube suspension is made with a solvent. Any solvent that can suspend carbon nanotubes can be used. The suspension can be stable or unstable. Mechanical means can also be used to promote the suspension of the nanotubes. Suitable solvents for carbon nanotubes, and in particular, single-wall carbon nanotubes, include, but are not limited to, amides, such as N,N-dimethylformamide (DMF), N-methylpyrrolidone (NMP), dimethylacetamide (DMAc), and hexamethylphosphoramide, toluene, dimethylsulfoxide (DMSO), cyclopentanone, tetramethylene sulfoxide, ε-caprolactone and combinations thereof. Any other solvent or combination of solvents that can suspend carbon nanotubes can be used. Although not meant to be held by theory, the use of a solvent to form the nanotube suspension can reduce or eliminate the use of nanotube stabilizers, such as surfactants and polymers, described and listed above. Without a stabilizer, the nanotubes can be in intimate contact with each other throughout the nanotube network to provide enhanced conductivity in the composite.

The carbon nanotube suspension is mixed with a polymer suspension to form a carbon nanotube-polymer suspension. The polymer suspension is comprised of polymer and water, and the polymer is in a form of polymer particles that essentially exclude the carbon nanotubes from entering into the particles. The polymer can be any polymer that can be suspended in particle form in an aqueous suspension, such as those mentioned above. The polymer particles may also be stabilized in the aqueous environment by any stabilizer mentioned above to stabilize polymer suspensions.

Although not meant to be limited by theory, when the nanotubes are in a solvent and added to the aqueous polymer suspension, the hydrophobic nanotubes tend to be attracted to, and accumulate on, the generally hydrophobic polymer particles in preference to being in the water-phase of the polymer suspension. In contrast to the method wherein an aqueous nanotube suspension is used with an aqueous polymer suspension and the trapping of the nanotubes between the polymer particles is generally a physical phenomenon, in the embodiment wherein the nanotubes are in a solvent suspension, the nanotubes' accumulation at the polymer particle surface also involves solvent/non-solvent attractive and repulsive forces.

After the solvent-based nanotube suspension and water-based polymer suspension are mixed to form a carbon nanotube-polymer suspension, the water and solvent are removed from the carbon nanotube-polymer suspension to form a carbon nanotube-polymer composite, wherein polymer particles coalesce and the carbon nanotubes reside primarily between the polymer particles. Although not meant to be held by theory, the solvent can enhance the coalescing of the polymer particles by swelling the outside of the polymer particles. The removal of solvent and water can be by any known means of solvent and water removal, such as those means listed above.

In another embodiment of the invention, a carbon nanotube-polymer composite, comprises forming a solvent-based nanotube suspension, mixing the nanotube suspension with a solvent-based polymer suspension to form a carbon nanotube-polymer suspension, wherein the polymer is in a form of particles and wherein the nanotubes are generally excluded from entering into the polymer particles, and removing solvent from the carbon nanotube-polymer suspension wherein the polymer particles coalesce and the carbon nanotubes are trapped between the polymer particles and form a interconnecting network providing the polymer composite with electrical conductivity. In this embodiment, the solvent-based carbon nanotube suspension can be based on solvents cited above or any solvent known to suspend carbon nanotubes. The suspension can be stable or unstable, Mechanical means, such as sonication or vigorous mixing, can also be used to promote the suspension of the nanotubes.

The suspension of polymer particles can be in the same solvent or a different solvent than that of the nanotube suspension. The polymer particles can be suspended in any suitable solvent, preferably a solvent that does not dissolve the polymer particles, and, more preferably, a solvent that does not substantially swell the polymer particles, and more preferably, a solvent that does not substantially penetrate into the polymer particles. For example, toluene can be used to form a polymer suspension of poly(vinyl acetate) particles. Toluene can also be used to form a nanotube suspension. Thus, toluene would be a suitable solvent for a nanotube suspension and polymer particle suspension. After mixing the two suspensions to form a carbon nanotube-polymer suspension, the solvent (or solvents) is removed from the carbon nanotube-polymer suspension to form a carbon nanotube-polymer composite, wherein polymer particles coalesce and the carbon nanotubes reside primarily between the polymer particles.

The conductive polymer composites comprising single-wall carbon nanotubes and coalesced polymer particles of the present invention have enhanced electrical and thermal conductivities which make them useful in applications that require thermal conduction, electrical conduction, electromagnetic shielding, or combinations thereof. Such compositions are useful in paints, coatings, and adhesives. Because only a small concentration of nanotubes are needed to form conductive networks in the polymer matrix comprised of polymer particles that essentially exclude the nanotubes, electrical and thermal conductivity is imparted to the composite while not degrading the desired physical and mechanical processing properties of the matrix polymer. The network of carbon nanotubes may additionally provide enhanced strength, elasticity, and toughness to the polymer composite.

The following examples are included to demonstrate preferred embodiments of the invention. It should be appreciated by those of skill in the art that the techniques disclosed in the example which follow represent techniques discovered by the inventors to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the scope of the invention.

**Example 1**

This example demonstrates a method for making a nanotube-polymer composite comprising SWNT and poly (vinyl acetate). Poly(vinyl acetate) (PVAc) homopolymer emulsion (VINAC® XX210) was obtained from Air Products. (VINAC is a registered trademark of Air Products and Chemicals, Inc., Allentown, PA.) The emulsion contained approximately 55 wt% solids in water. The number average polymer particle size ($D_n$) was 105 nm (0.105 micron) and the volume average polymer particle size ($D_v$) was 2.5 $\mu$m (2.5 micron). The glass transition temperature ($T_s$) for this polymer system was 34°C and the minimum film formation temperature (MFFT) was approximately 15°C, permitting the formation of coherent films under ambient drying conditions.

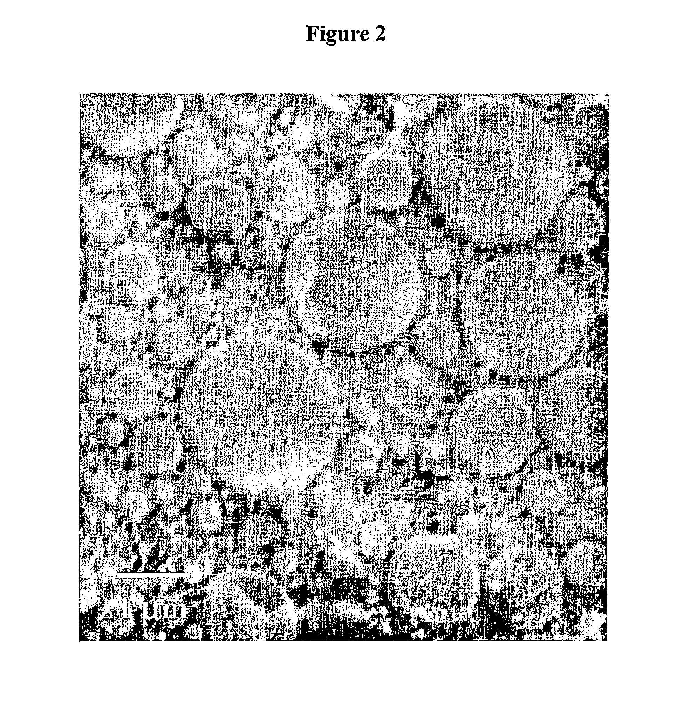

A cryo-SEM (Scanning Electron Micrograph) was taken of the PVAc emulsion using a cryogenic fixture attached to a JEOL 840 SEM. Emulsion samples were frozen in liquid ethane and transferred to a cryogenic chamber where frost was sublimed. The frozen samples were then fractured and coated *in-situ* with platinum. The cryo-SEM of the polymer emulsion is shown in Figure 2. Although the polymer particles were approximately spherical in the emulsion, the cryogenic technique made them appear flat in the micrograph. The polymer particles are polydisperse in size, which ranges from less than about 0.5 micron to about 2.5 microns in diameter.

As-produced HIPCO® single-walled nanotubes (SWNT) were obtained from Carbon Nanotechnologies, Inc., Houston, Texas. (HIPCO is a registered trademark of Carbon Nanotechnologies, Inc., Houston, Texas.) The nanotubes (Lot# R0210) had a very fluffy consistency contained about 29 wt% impurities from metal catalyst and amorphous carbon. Gum Arabic (GA) in powder form was obtained from Aldrich (Milwaukee, WI) and used to stabilize the SWNT suspension.

1.5 g SWNT were combined with an aqueous solution of 2 wt% GA and mixed well using a mortar and pestle. After mixing, the SWNT-based slurry was further diluted with 2 wt% GA solution to achieve a 200g mixture (1.5g SWNT, 6g GA, and 192.5g deionized water). This aqueous mixture was blended with a high-speed impeller blade ("F" Style Blade with 2" diameter purchased from Paul N. Gardner in Pompano Beach, FL) mounted to a standard drill press at 3100 rpm for 15 minutes. After blending, the SWNT mixture was sonicated for 30 minutes.

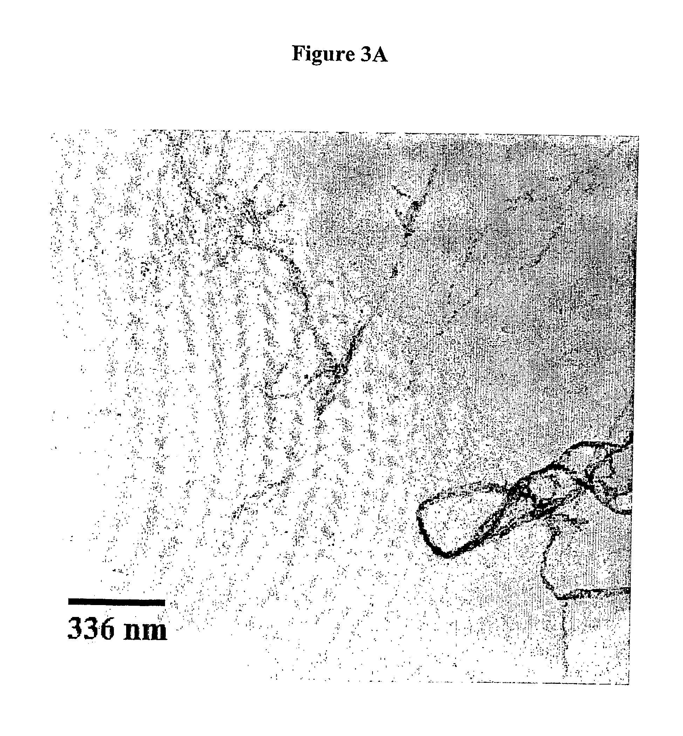

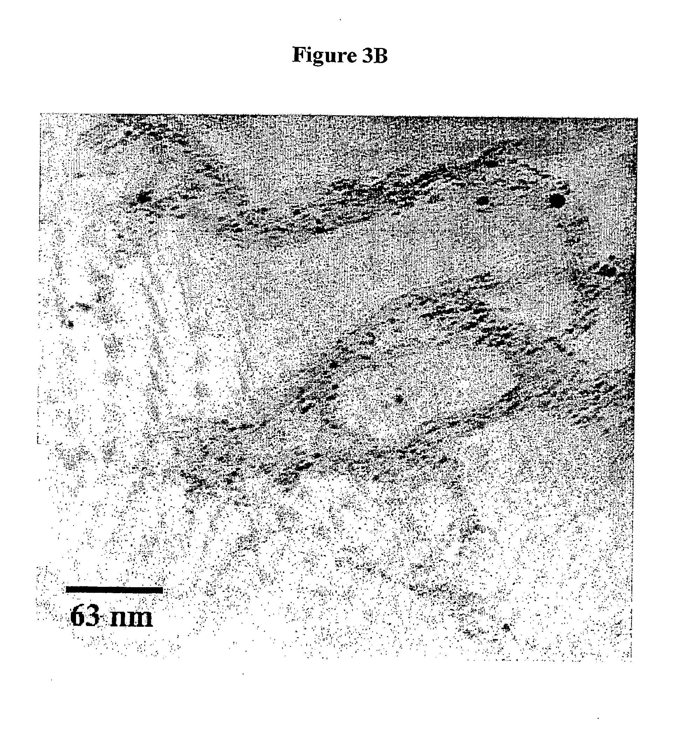

Transmission Electron Micrographs (TEM) of the GA-stabilized nanotubes were obtained with a Philips EM420 TEM operated at 120 kV. Samples were prepared for imaging by placing a drop of the aqueous mixture containing 0.4 wt% SWNT and 2 wt% GA onto a TEM grid and, after two minutes, wicking the liquid away. Figure 3A is a TEM at 37,500X magnification of GA-stabilized single-wall carbon nanotubes. Figure 3B is a TEM at 200,OOOX magnification of GA-stabilized single-wall carbon nanotubes. The small dark dots, in both Figure 3A and Figure 3B, are attributed to residual catalyst impurity.

The SWNT mixture was then filtered to remove water and excess GA, and dried at 70°C for one hour. The resulting GA-stabilized SWNT had a 1:1 ratio with GA after filtration. The dried GA-stabilized SWNT was recombined with water and mixed using a mortar and pestle, after which, PVAc emulsion was added. Blending of the GA-stabilized SWNT and the PVAc was done under high shear conditions using the same high-speed impeller blade described above at 3100 rpm for 15 minutes in a 1-liter steel beaker. A few drops of DREWPLUS® L-483 foam-control agent (Ashland Specialty Chemical Company) were added to the mixture to control the foam level during mixing. (DREWPLUS is a registered trademark of Ashland Inc.)

Mixtures of GA-stabilized SWNT and PVAc emulsion were prepared with varying SWNT concentrations. The mixture with the highest SWNT concentration was prepared first and used as a master batch. Mixtures with lower SWNT concentrations were prepared from the master batch by diluting the master batch with more PVAc emulsion and water. The mixtures with lower SWNT concentrations were blended under high shear using the same high-speed impeller blade described above at 3100 rpm for 15 minutes. Following impelling, a portion of the GA-stabilized-SWNT-PVAc mixture was removed and sonicated for 30 minutes. GA-stabilized-SWNT-PVAc mixtures containing progressively smaller SWNT concentrations were prepared by successively diluting the remaining concentrated mixture by adding more water and PVAc emulsion, followed by an additional 15 minutes of impelling. All of the aqueous GA-stabilized SWNT-PVAc mixtures were impelled at a constant 10 wt% solids in water.

Solid composite films were prepared by drying each aqueous SWNT-PVAc mixture on 50-$\mu$m polyethylene

terephthalate (PET) film within a 175-$\mu$m deep (2" x 2") PET film frame. Each SWNT-PVAc composite films was dried for 24 hours under ambient conditions followed by an additional 24 hours in a dry box having less than 20% relative humidity. The resulting dried SWNT-PVAc films were 125 $\pm$ 5 $\mu$m thick and had an opaque black appearance. Film thicknesses in the range of about 25 microns to about 500 microns are suitable film thicknesses for a conductive film. Below 25 microns, the film thickness would be in the two-dimensional percolation regime.

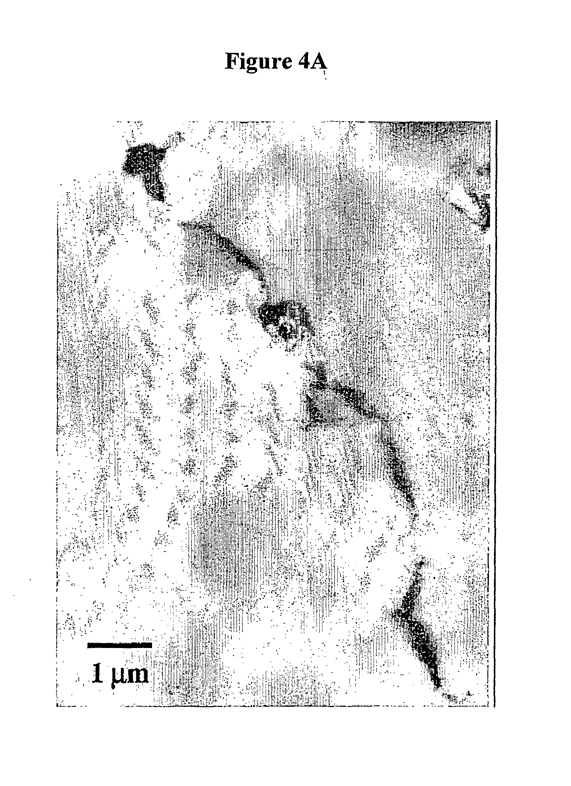

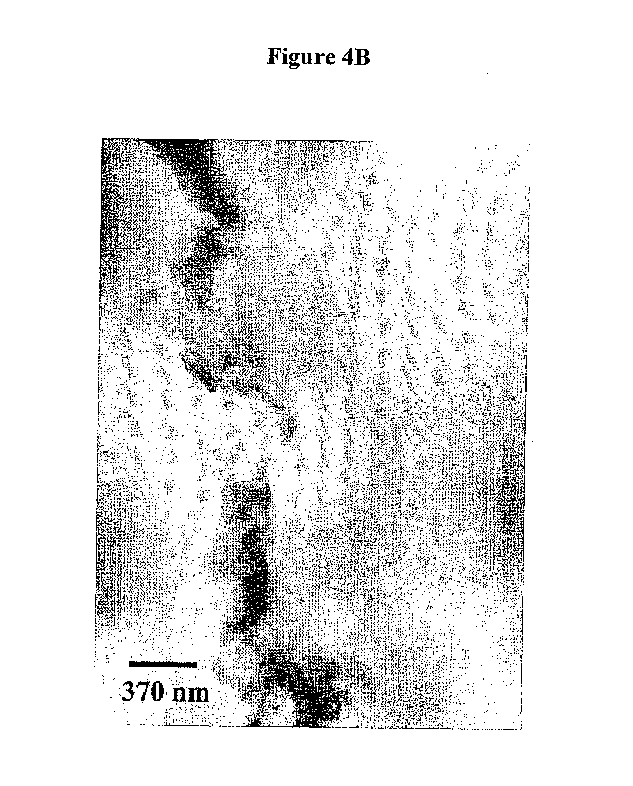

TEM micrographs of the GA-stabilized-SWNT-PVAc composite film prepared from PVAc emulsion and containing 3 wt% SWNT were obtained using a JEOL 100CX TEM operated at 80 kV. Figure 4A is a TEM at 10,000X magnification of a 3 wt% SWNT-PVAc composite film. The light gray, generally spheroidal shapes are PVAc polymer particles approximately 1-2 microns wide. The dark gray/black sinuous forms are single-wall carbon nanotube material. Figure 4B is a TEM micrograph at 27,000X magnification of the 3 wt% SWNT-PVAc composite film. In both Figures 4A and 4B, the polymer particles appear to generally exclude the nanotube material so that the nanotubes reside between and at the edges of the coalesced polymer particles. The relatively long networks of S WNT can be seen winding between and around at least a portion of the comparatively large polymer particles. The polymer particles that exclude SWNT dramatically reduce the volume available for SWNT or other conductive fillers, such as carbon black, to form conductive networks. Thus, a greatly reduced amount of SWNT or other conductive filler can be used to attain the percolation threshold. Combining the excluded volume of polymer with the large aspect ratio of the SWNT creates conditions conducive for significantly lower percolation thresholds than those that could be achieved the same polymer using other carbon-based conductive fillers or by using SWNT in a polymer matrix wherein the SWNT material was homogeneously dispersed throughout the matrix polymer.

## Example 2

A carbon black-PVAc composite was prepared in the same manner as the SWNT-PVAc composites of Example 1, except that no Gum Arabic was used to stabilize the carbon black. A conductive grade carbon black (CONDUCTEX® 975 ULTRA®, with a 21-nm mean primary particle size and density of 1.89 g/cm$^3$, from Columbian Chemicals) and was slowly added as a dry powder to PVAc emulsion while stirring with an impeller blade at 880 rpm. (CONDUCTEX and ULTRA are registered trademarks of Columbian Chemicals Company.)

Carbon black-PVAc composite films were prepared in the same manner as the SWNT-PVAc composite films prepared in Example 1. The film thicknesses were 200 to 400 microns.

## Example 3

This example demonstrates a method of making a composite comprising SWNT and poly(vinyl acetate) wherein polyvinylpyrrolidone (PVP) was used as a stabilizer for the single-wall carbon nanotube suspension. Poly(vinyl acetate) homopolymer emulsion (VINAC XX210) from Air Products was from a different lot from that used in Examples I and 2, contained contained approximately 55 wt% solids in water and had a number average polymer particle size ($D_n$) of 108 nm, a volume average polymer particle size ($D_v$) of 2.5 $\mu$m, a glass transition temperature ($T_g$) of about 34°C and a minimum film formation temperature (MFFT) of about 15°C.

As-produced HIPCO single-walled nanotubes (SWNT), (Lot #R0210 containing about 29 wt% impurities attributed to residual catalyst metal and amorphous carbon) were obtained from Carbon Nanotechnologies, Inc., Houston, Texas. Polyvinyl pyrrolidone ($M_w$ = 10,000 g/mole) in powder form was obtained from Aldrich (Milwaukee, WI) and used to stabilize the SWNT suspension.

Similar to Example 1, 1.5 g single-wall carbon nanotubes were combined with an aqueous solution of 2 wt% PVP and mixed well using a mortar and pestle. After mixing, the SWNT-based slurry was further diluted with 2 wt% PVP solution to achieve a 200g mixture (1.5g SWNT, 6g PVP, and 192.5g deionized water). This aqueous mixture was blended with a high-speed impeller blade mounted to a standard drill press, described above, at 3100 rpm for 15 minutes. After blending, the SWNT mixture was sonicated for 30 minutes, filtered to remove water and excess PVP, and dried at 70°C for one hour. The resulting PVP-stabilized SWNT had a 1:1 ratio with PVP after filtration.

## Example 4

This example demonstrates the electrical conductivity of SWNT-polymer composite films prepared in Example 1. Electrical conductivity measurements were made with a Loresta AP (MCP-T4000) four-point probe made by Mitsubishi, which is able to measure conductivity down to 10$^{-5}$ S/cm (Siemens/cm).

The conductivities of single-wall carbon nanotube-poly(vinyl acetate) composite films produced at several SWNT loadings were measured and fitted to the standard percolation power law model, given in Equation 1, below:

$$\sigma = \sigma_0 (V-V_c)^S \qquad\qquad \text{(Equation 1)}$$

where, $\sigma$ is the composite conductivity,
$\sigma_0$ is a scaling factor related to the intrinsic conductivity of the filler,
S is the power law exponent (typically 1.6 - 2.0 for random systems)
(See G. Deutscher, et al., "Percolation Structures and Processes" Annals of the Israel Physical Society, Vol.5, American Institute of Physics:New York, 1983, chapter 10)
V is the is the volume fraction of filler, and
$V_c$ is that of the volume fraction of the filler at the percolation threshold.

In fitting the GA-stabilized-SWNT-PVAc composite data to the standard percolation power law equation, the weight fraction, F, of SWNT was used in lieu of the volume fraction, due to the uncertainty in estimating the SWNT density. Thus, the GA-stabilized-SWNT-PVAc composite data was fitted to the modified power law Equation 2, given below.

$$\sigma = \sigma_0 (F-F_c)^S \qquad\qquad \text{(Equation 2)}$$

where, $\sigma$ is the composite conductivity,
$\sigma_0$ is a scaling factor related to the intrinsic conductivity of the filler,
S is the power law exponent
F is the is the weight fraction of carbon nanotubes in the composite, and
$F_c$ is that of the weight fraction of carbon nanotubes in the composite at the percolation threshold.

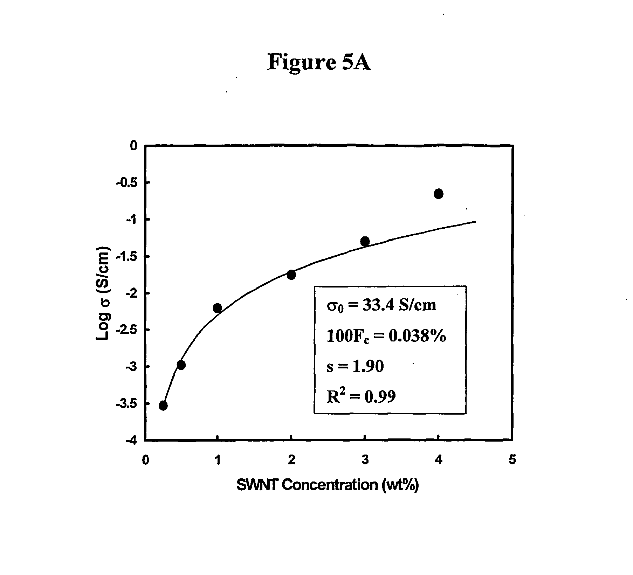

Using this assumption as per Equation 2, the GA-stabilized SWNT-PVAc composite had a percolation threshold $F_c$ of approximately 0.04 wt%. The fitted data resulted in $\sigma_0$=33.4 S/cm, $F_c$=0.038, and S-1.90, as shown in Figure 5A. Note, the percolation threshold of more than 0.3 wt% SWNT would be expected to be obtained with generally homogeneously-dispamd SWNT composites made by solvent-based or melt blending techniques. (See J.M Benoit et al., Synth. Met. Vol. 121, p1215 (2001), E. Kymakis et al., Synth Met. 127 (2002) p. 39, and A. Dufresne et al., J. Mater. Sci. 37 (2002) p. 3915).

The percolation threshold of the carbon black-PVAc composite films made with PVAc emulsion according to Example 2 and fitted to the power law model was determined to be 4 wt%, i.e. about two orders of magnitude higher than the comparably-prepared SWNT composites. Note, the use of solvent-based or melt blending techniques, the percolation threshold for a carbon black composite would be expected to be obtained with composites containing more than 25 wt% carbon black, (see, J.C. Grunlan et al. J. Mater. Res. 14, (1999)p. 4132, and M-Q. Zhang, et al., Macromolecules 31 (1998) p. 6724).

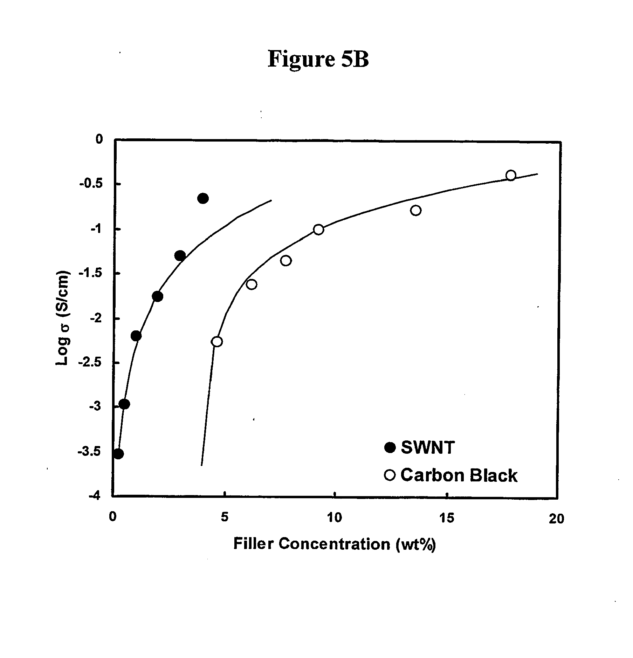

Figure 5B shows a plot of log $\sigma$ (electrical conductivity) in units of Siemens/cm (S/cm) as a function of filler concentration for dried GA-stabilized-SWNT-PVAc composite films as prepared in Example 1 (black circles) and carbon black-PVAc composite films as prepared in Example 2 (white circles). The data for both fillers were fit to the power law equation (Eq. 2).

The PVP-stabilized SWNT-PVAc composite had a percolation threshold at about 3 wt% SWNT.

All of the compositions and methods disclosed and claimed herein can be made and executed without undue experimentation in light of the present disclosure.

**Claims**

1. A conductive carbon nanotube-polymer composite, comprising:

   (a) carbon nanotubes in an amount less than 1 wt.% of the composite, and
   (b) polymer in a form of coalesced polymer particles, wherein the carbon nanotubes are inhomogeneously dispersed at the microscopic level in the carbon nanotube-polymer composite, wherein the carbon nanotubes reside primarily between the coalesced polymer particles, and wherein the carbon nanotubes form an interconnecting network between at least some of the coalesced polymer particles.

2. The composite of claim 1 wherein the carbon nanotubes are selected from the group consisting of single-wall carbon nanotubes, multi-wall carbon nanotubes and a combination thereof.

3. The composite of claim 2 wherein the carbon nanotubes are purified.

4. The composite of claim 2 further comprising a nanotube stabilizer.

5. The composite of claim 4 wherein the nanotube stabilizer is a surfactant.

6. The composite of claim 5 wherein the surfactant is sodium dodecyl sulfate.

7. The composite of claim 5 wherein the surfactant is a fatty acid soap.

8. The composite of claim 4 wherein the nanotube stabilizer is a protein.

9. The composite of claim 4 wherein the nanotube stabilizer is Gum Arabic.

10. The composite of claim 4 wherein the nanotube stabilizer is a water-soluble polymer.

11. The composite of claim 10 wherein the water-soluble is poly(vinyl pyrrolidone).

12. The composite of claim 10 wherein the water-soluble polymer is selected from the group consisting of amphiphilic polymers, cellulosic polymers, polyelectrolytes, ionic polymers, acrylate polymers, acrylic acid polymers, copolymers thereof and combinations thereof.

13. The composite of claim 10 where the water-soluble polymer is selected from the group consisting of poly(vinyl alcohol), poly(acrylic acid), poly(methacrylic acid), sodium polyacrylate, polyacrylamide, poly(ethylene oxide), polyethylene glycol, poly (ethylene formamide), polyhydroxyether, poly(vinyl pyrrolidone), poly(vinyl oxazolidinone), methyl cellulose, ethyl cellulose, carboxymethyl cellulose, ethyl(hydroxyethyl) cellulose, sodium polyacrylate, copolymers thereof, and combinations thereof.

14. The composite of claim 10 wherein the water-soluble polymer is selected from the group consisting of polystyrene sulfonate (PSS), poly(1-vinyl pyrrolidone-co-vinyl acetate), poly(1-vinyl pyrrolidone-co-acrylic acid), poly(1-vinyl pyrrolidone-co-dimethylaminoethyl methacrylate), polyvinyl sulfate, poly(sodium styrene sulfonic acid-co-maleic acid), dextran, dextran sulfate, gelatin, bovine serum albumin, poly(methyl methacrylate-co-ethyl acrylate), polyallyl amine, and combinations thereof.

15. The composite of claim 10 wherein the polymer particles were derived from a polymer emulsion.

16. The composite of claim 10 wherein the polymer particles were derived from a polymer latex.

17. The composite of claim 1 wherein the polymer particles are of a size in a range of 0.01 micron and 100 microns in any dimension.

18. The composite of claim 1 wherein the polymer particles are of a size in a range of 0.1 micron and 10 microns in any dimension.

19. The composite of claim 1 wherein the polymer particles are of a size in a range of 0.5 micron and 5 microns in any dimension.

20. The composite of claim 1 wherein the polymer particles comprise a polymer selected from the group consisting of poly(vinyl acetate) and copolymers of poly(vinyl acetate).

21. The composite of claim 1 wherein the polymer particles comprise a polymer selected from the group selected from acrylate polymers, acrylic acid polymers, polyacrylic esters, polyacrylamides, polyacrylonitriles, chlorinated polymers, fluorinated polymers, styrenic polymers, polyurethanes, natural rubber, synthetic rubber polymers, vinylchloride-acrylate polymers, copolymers thereof and combinations thereof.

22. The composite of claim 1 wherein the polymer particles comprise a polymer selected from the group consisting of poly(vinyl acetate), poly(acrylic acid), poly(methyl methacrylate), polyacrylamide, polyacrylonitrile, polyvinylpropionate, polystyrene, polytetrafluoroethylene, poly(vinyl chloride), poly(vinylidene chloride), poly(vinyl chloride-ethylene), poly(vinyl chloride-propylene), poly(styrene-co-butadiene), styrene-acrylate copolymers, vinyl ethylene-vinyl chloride copolymer, poly(vinyl acetate-acrylate), poly(vinyl acetate-ethylene) and combinations thereof.

23. The composite of claim 1 further comprising a polymer particle stabilizer.

24. The composite of claim 23 wherein the polymer particle stabilizer is a surfactant.

25. The composite of claim 24 wherein the surfactant is sodium dodecyl sulfate.

26. The composite of claim 24 wherein the surfactant is a fatty acid soap.

27. The composite of claim 23 wherein the polymer stabilizer is a protein.

28. The composite of claim 23 wherein the polymer particle stabilizer is a water-soluble polymer.

29. The composite of claim 28 wherein the water-soluble polymer is poly(vinyl alcohol).

30. The composite of claim 28 wherein the water-soluble polymer is selected from the group consisting of amphiphilic polymers, cellulosic polymers, polyelectrolytes, ionic polymers, acrylate polymers, acrylic acid polymers, copolymers thereof and combinations thereof.

31. The composite of claim 28 wherein the water-soluble polymer is selected from the group consisting of Gum Arabic, poly(acrylic acid), poly(methacrylic acid), sodium polyacrylate, polyacrylamide, poly(ethylene oxide), polyethylene glycol, poly (ethylene formamide), polyhydroxyether, poly(vinyl pyrrolidone), poly(vinyl oxazolidinone), methyl cellulose, ethyl cellulose, carboxymethyl cellulose, ethyl(hydroxyethyl)cellulose, sodium polyacrylate, copolymer thereof, and combinations thereof.

32. The composite of claim 28 wherein the water-soluble polymer is selected from the group consisting of polystyrene sulfonate (PSS), poly(1-vinyl pyrrolidone-co-vinyl acetate), poly(1-vinyl pyrrolidone-co-acrylic acid), poly(1-vinyl pyrrolidone-co-dimethylaminoethyl methacrylate), polyvinyl sulfate, poly(sodium styrene sulfonic acid-co-maleic acid), dextran, dextran sulfate, gelatin, bovine serum albumin, poly(methyl methacrylate-co-ethyl acrylate), polyallyl amine, and combinations thereof.

33. The composite of claim 1 wherein the polymer particles comprise a polymer selected from the group consisting of poly(vinyl acetate) and poly(vinyl acetate) copolymer, and polymer particle stabilizer comprises poly(vinyl alcohol).

34. The composite of claim 1 wherein the carbon nanotube-polymer composite comprises nanotubes in an amount less than 0.1 wt.% of the composite.

35. The composite of claim 1 wherein the carbon nanotube suspension further comprises one or more conductive fillers.

36. The composite of claim 35 wherein one or more conductive fillers are selected from the group consisting of carbon black, small fullerenes and combinations thereof.

37. The composite of claim 36 wherein the small fullerenes are selected from the group consisting of $C_{60}$, $C_{70}$, $C_{84}$ and combinations thereof.

38. The composite of claim 9 wherein the nanotube-polymer composite comprises single-wall carbon nanotubes, wherein the polymer is polyvinyl acetate and wherein the nanotube-polymer composite has a percolation threshold of less than 0.04 wt% single-wall carbon nanotubes inn the composite.

39. The composite of claim 1 wherein the composite is in the form of a film.

40. The composite of claim 39 wherein the film has a thickness in the range of 25 microns and 500 microns.

41. A method for making a conductive carbon nanotube-polymer composite comprising:

   (a) forming a carbon nanotube suspension comprising carbon nanotubes and a first solvent;

(b) mixing the carbon nanotube suspension and a polymer suspension, wherein the polymer suspension comprises a polymer and a second solvent, and wherein the polymer is in a form of polymer particles, to form a carbon nanotube-polymer suspension, and

(c) removing the first solvent and second solvent from the carbon nanotube-polymer suspension to form a carbon nanotube-polymer composite, wherein the polymer particles coalesce and the carbon nanotubes reside primarily between the polymer particles, wherein the carbon nanotubes are inhomogenaously dispersed at the microscopic level in the carbon nanotube-polymer composite, and wherein said composite comprises nanotubes in an amount less than 1 wt.% of the composite.

42. The method of claim 41, wherein the first solvent is water.

43. The method of claim 42, wherein the second solvent is water.

44. The method of any one of claims 41 to 43 wherein the carbon nanotubes are selected from the group consisting of single-wall carbon nanotubes, multi-wall carbon nanotubes and a combination thereof.

45. The method of claim 44 wherein the carbon nanotubes are purified.

46. The method of claim 45 wherein the carbon nanotube suspension further comprises a nanotube stabilizer.

47. The method of claim 46 wherein the nanotube stabilizer is a surfactant.

48. The method of claim 47 wherein the surfactant is sodium dodecyl sulfate.

49. The method of claim 47 wherein the surfactant is a fatty acid soap.

50. The method of claim 46 wherein the nanotube stabilizer is a protein.

51. The method of claim 46 wherein the nanotube stabilizer is Gum Arabic.

52. The method of claim 46 wherein the nanotube stabilizer is a water-soluble polymer

53. The method of claim 52 wherein the water-soluble polymer is poly(vinyl pyrrolidone).

54. The method of claim 52 wherein the water-soluble polymer is selected from the group consisting of amphiphilic polymers, cellulosic polymers, polyelectrolytes, ionic polymers, acrylate polymers, acrylic acid polymers, copolymers thereof and combinations thereof.

55. The method of claim 52 wherein the water-soluble polymer is selected from the group consisting of poly(vinyl alcohol), poly(acrylic acid), poly(methacrylic acid), sodium polyacrylate, polyacrylamide, poly(ethylene oxide), polyethylene glycol, poly(ethylene formamide), polyhydroxyether, poly(vinyl pyrrolidone), poly(vinyl oxazolidinone), methyl cellulose, ethyl cellulose, carboxymethyl cellulose, ethyl(hydroxyethyl)cellulose, sodium polyacrylate, copolymers thereof, and combinations thereof.

56. The method of claim 52 wherein the water-soluble polymer is selected from the group consisting of polystyrene sulfonate (PSS), poly(1-vinyl pyrrolidone-co-vinylacetate), poly(1-vinyl pyrrolidone-co-acrylic acid), poly(1-vinyl pyrrolidone-co-dimethylaminoethyl methacrylate), polyvinyl sulfate, poly(sodium styrene sulfonic acid-co-maleic acid), dextran, dextran sulfate, gelatin, bovine serum albumin, poly(methyl methacrylate-co-ethyl acrylate), polyallyl amine, and combinations thereof.

57. The method of any one of claims 41 to 43 wherein the polymer suspension comprises a polymer emulsion.

58. The method of any one of claims 41 to 43 wherein the polymer suspension comprises a polymer latex.

59. The method of any one of claims41 to 43 wherein the polymer suspension comprises a polymer selected from the group consisting of poly(vinyl acetate) and copolymers of poly(vinyl acetate).

60. The method of any one of claims 41 to 43 wherein the polymer suspension comprises a polymer selected from the group selected from acrylate polymers, acrylic acid polymers, polyacrylic esters, polyacrylamides, polyacrylonitriles, chlorinated polymers, fluorinated polymers, styrenic polymers, polyurethanes, natural rubber, synthetic rubber polymers, vinylchloride-acrylate polymers, copolymers thereof and combinations thereof.

61. The method of any one of claims 41 to 43 wherein the polymer suspension comprises a polymer selected from the group consisting of poly(vinyl acetate), poly(acrylic acid), poly(methyl methacrylate), polyacrylamide, polyacrylontrile, polyvinylpropionate, polystyrene, polytetrafluoroethylene, poly(vinyl chloride), poly(vinylidene chloride), poly(vinyl chloride-ethylene), poly(vinyl chloride-ethylene), poly(vinyl chloride-propylene), poly(styrene-co-butadiene), styrene-acrylate copolymers, vinyl ethylene-vinyl chloride copolymer, poly(vinyl acetate-acrylate), poly(vinyl acetate-ethylene) and combinations thereof.

62. The method of any one of claims 41 to 43 wherein the polymer suspension further comprises a polymer stabilizer.

63. The method of claim 62 wherein the polymer stabilizer is a surfactant.

64. The method of claim 63 wherein the surfactant is sodium dodecyl sulfate.

65. The method of claim 63 wherein the surfactant is a fatty acid soap.

66. The method of claim 62 wherein the polymer stabilizer is a protein.

67. The method of claim 62 wherein the polymer stabilizer is a water-soluble polymer.

68. The method of claim 67 wherein the water-soluble polymer is poly(vinyl alcohol).

69. The method of claim 67 wherein the water-soluble polymer is selected from the group consisting of amphiphilic polymers, cellulosic polymers, polyelectrolytes, ionic polymers, acrylate polymers, acrylic acid polymers, copolymers thereof and combinations thereof.

70. The method of claim 67 wherein the water-soluble polymer is selected from the group consisting of Gum Arabic, poly(acrylic acid), poly(methacrylic acid), sodium polyacrylate, polyacrylamide, poly(ethylene oxide), polyethylene glycol, poly(ethylene formamide), polyhydroxyether, poly(vinyl pyrrolidone), poly(vinyl oxazolidinone), methyl cellulose, ethyl cellulose, carboxymethyl cellulose, ethyl(hydroxyethyl)cellulose, sodium polyacrylate, copolymers thereof, and combinations thereof.

71. The method of claim 67 wherein the water-soluble polymer is selected from the group consisting of polystyrene sulfonate (PSS), poly(1-vinyl pyrrolidone-co-vinyl acetate), poly(1-vinyl pyrrolidone-co-acrylic acid), poly(1-vinyl pyrrolidone-co-dimethylaminoethyl methacrylate), polyvinyl sulfate, poly(sodium styrene sulfonic acid-co-maleic acid), dextran, dextran sulfate, gelatin, bovine serum albumin, poly(methyl methacrylate-co-ethyl acrylate), polyallyl amine, and combinations thereof.

72. The method of any one of claims 41-43 wherein the polymer suspension comprises a polymer selected from the group consisting of poly(vinyl acetate) and poly(vinyl acetate) copolymer, and wherein the polymer suspension comprises a water-soluble polymer Stabilizer comprising poly(vinyl alcohol).

73. The method of anyone of claims 41-43 wherein the polymer particles are of a size in a range of 0.01 micron and 100 microns in any dimension.

74. The method of any one of claims 41-43 wherein the polymer particles are of a size in a range of 0.01 micron and 10 microns in any dimension.

75. The method of any one of claims 41-43 wherein the carbon nanotube suspension further comprises one or more conductive fillers.

76. The method of claim 75 wherein the one or more conductive fillers are selected from the group consisting of carbon black, small fullerenes and combinations thereof.

77. The method of claim 76 wherein the small fullerenes are selected from the group consisting of $C_{60}$, $C_{70}$, $C_{84}$ and

combinations thereof.

**78.** The method of claim 51 wherein the nanotube-polymer composite comprises single-wall carbon nanotubes, wherein the polymer is polyvinyl acetate and wherein the nanotube-polymer composite has a percolation threshold of less than about 0.04 wt% single-wall carbon nanotubes in the composite.

**79.** The method of claim 41 wherein the first solvent and the second solvent are the same.

**80.** The method of claim 41 wherein the first solvent and the second solvent are different.

**81.** The method of claim 41 wherein the first solvent and the second solvent comprise toluene.


**Patentansprüche**

**1.** Leitender Kohlenstoff-Nanoröhren-Polymer-Verbundstoff umfassend:

(a) Kohlenstoff-Nanoröhren in einer Menge von weniger als 1 Gew.-%, bezogen auf das Gewicht des Verbundstoffs, und
(b) Polymer in Form koaleszierter Polymerteilchen, wobei die Kohlenstoff-Nanoröhren auf mikroskopischer Ebene inhomogen in dem Kohlenstoff-Nanoröhren-Polymer-Verbundstoff verteilt sind, so dass sie sich größtenteils zwischen den koaleszierten Polymerteilchen befinden, und wobei die Kohlenstoff-Nanoröhren ein verbindendes Netzwerk zwischen zumindest einigen koaleszierten Polymerteilchen bilden.

**2.** Verbundstoff nach Anspruch 1, wobei die Kohlenstoff-Nanoröhren aus der Gruppe ausgewählt sind mit einwandigen Kohlenstoff-Nanoröhren, mehrwandigen Kohlenstoff-Nanoröhren und deren Kombination.

**3.** Verbundstoff nach Anspruch 2, wobei die Kohlenstoff-Nanoröhren gereinigt sind.

**4.** Verbundstoff nach Anspruch 2, der zudem einen Nanoröhren-Stabilisator umfasst.

**5.** Verbundstoff nach Anspruch 4, wobei der Nanoröhren-Stabilisator ein oberflächenaktives Mittel ist.

**6.** Verbundstoff nach Anspruch 5, wobei das oberflächenaktive Mittel Natriumdodecylsulfat ist.

**7.** Verbundstoff nach Anspruch 5, wobei das oberflächenaktive Mittel eine Fettsäureseife ist.

**8.** Verbundstoff nach Anspruch 4, wobei der Nanoröhren-Stabilisator ein Protein ist.

**9.** Verbundstoff nach Anspruch 4, wobei der Nanoröhren-Stabilisator Gummiarabicum ist.

**10.** Verbundstoff nach Anspruch 4, wobei der Nanoröhren-Stabilisator ein wasserlösliches Polymer ist.

**11.** Verbundstoff nach Anspruch 10, wobei das wasserlösliche Polymer Poly(vinylpyrrolidon) ist.

**12.** Verbundstoff nach Anspruch 10, wobei das wasserlösliche Polymer aus der Gruppe ausgewählt ist mit amphiphilen Polymeren, Cellulosepolymeren, Polyelektrolyten, ionischen Polymeren, Acrylatpolymeren, Acrylsäurepolymeren, deren Copolymeren und deren Kombinationen.

**13.** Verbundstoff nach Anspruch 10, wobei das wasserlösliche Polymer aus der Gruppe ausgewählt ist mit Poly(vinylalkohol), Poly(acrylsäure), Poly(methacrylsäure), Natriumpolyacrylat, Polyacrylamid, Poly(ethylenoxid), Polyethylenglycol, Poly(ethylenformamid), Polyhydroxyether, Poly(vinylpyrrolidon), Poly(vinyloxazolidinon), Methylcellulose, Ethylcellulose, Carboxymethylcellulose, Ethyl(hydroxyethyl)cellulose, Natriumpolyacrylat, deren Copolymeren und deren Kombinationen.

**14.** Verbundstoff nach Anspruch 10, wobei das wasserlösliche Polymer aus der Gruppe ausgewählt ist mit Polystyrolsulfonat (PSS), Poly(1-vinylpyrrolidon-Co-vinylacetat), Poly(1-vinylpyrrolidon-Co-acrylsäure), Poly(1-vinylpyrrolidon-Co-dimethylaminoethylmethacrylat), Polyvinylsulfat, Poly(natriumstyrolsulfonsäure-Co-maleinsäure), Dextran, Dextransulfat, Gelatine, Rinderserumalbumin, Poly(methylmethacrylat-Co-ethylacrylat), Polyallylamin und deren Kombinationen.

15. Verbundstoff nach Anspruch 10, wobei die Polymerteilchen aus einer Polymeremulsion stammten.

16. Verbundstoff nach Anspruch 10, wobei die Polymerteilchen aus einem Polymerlatex stammten.

17. Verbundstoff nach Anspruch 1, wobei die Polymerteilchen in jeder Ausdehnungsrichtung im Größenbereich von 0,01 Mikron bis 100 Mikron liegen.

18. Verbundstoff nach Anspruch 1, wobei die Polymerteilchen in jeder Ausdehnungsrichtung im Größenbereich von 0,1 Mikron bis 10 Mikron liegen.

19. Verbundstoff nach Anspruch 1, wobei die Polymerteilchen in jeder Ausdehnungsrichtung im Größenbereich von 0,5 Mikron bis 5 Mikron liegen.

20. Verbundstoff nach Anspruch 1, wobei die Polymerteilchen ein Polymer umfassen, das aus der Gruppe ausgewählt ist mit Poly(vinylacetat) und Copolymeren von Poly(vinylacetat).

21. Verbundstoff nach Anspruch 1, wobei die Polymerteilchen ein Polymer umfassen, das aus der Gruppe ausgewählt ist mit Acrylatpolymeren, Acrylsäurepolymeren, Polyacrylestern, Polyacrylamiden, Polyacrylonitrilen, chlorierten Polymeren, fluorierten Polymeren, Styrolpolymeren, Polyurethanen, Naturkautschuk, synthetischen Kautschukpolymeren, Vinylchlorid-Acrylat-Polymeren, deren Copolymeren und deren Kombinationen.

22. Verbundstoff nach Anspruch 1, wobei die Polymerteilchen ein Polymer umfassen, das aus der Gruppe ausgewählt ist mit Poly(vinylacetat), Poly(acrylsäure), Poly(methylmethacrylat), Polyacrylamid, Polyacrylonitril, Polyvinylpropionat, Polystyrol, Polytetrafluorethylen, Poly(vinylchlorid), Poly(vinylidenchlorid), Poly(vinylchlorid-ethylen), Poly(vinylchlorid-propylen), Poly(styrol-Co-butadien), Styrolacrylat-Copolymeren, Vinylethylen-Vinylchlorid-Copolymer, Poly(vinylacetat-acrylat), Poly(vinylacetat-ethylen) und deren Kombinationen.

23. Verbundstoff nach Anspruch 1, der zudem einen Polymerteilchenstabilisator umfasst.

24. Verbundstoff nach Anspruch 23, wobei der Polymerteilchenstabilisator ein oberflächenaktives Mittel ist.

25. Verbundstoff nach Anspruch 24, wobei das oberflächenaktive Mittel Natriumdodecylsulfat ist.

26. Verbundstoff nach Anspruch 24, wobei das oberflächenaktive Mittel eine Fettsäureseife ist.

27. Verbundstoff nach Anspruch 23, wobei der Polymerstabilisator ein Protein ist.

28. Verbundstoff nach Anspruch 23, wobei der Polymerteilchenstabilisator ein wasserlösliches Polymer ist.

29. Verbundstoff nach Anspruch 28, wobei das wasserlösliche Polymer Poly(vinylalkohol) ist.

30. Verbundstoff nach Anspruch 28, wobei das wasserlösliche Polymer aus der Gruppe ausgewählt ist mit amphiphilen Polymeren, Cellulosepolymeren, Polyelektrolyten, ionischen Polymeren, Acrylatpolymeren, Acrylsäurepolymeren, deren Copolymeren und deren Kombinationen.

31. Verbundstoff nach Anspruch 28, wobei das wasserlösliche Polymer aus der Gruppe ausgewählt ist mit Gummiarabicum, Poly(acrylsäure), Poly(methacrylsäure), Natriumpolyacrylat, Polyacrylamid, Poly(ethylenoxid), Polyethylenglycol, Poly(ethylenformamid), Polyhydroxyether, Poly(vinylpyrrolidon), Poly(vinyloxazolidinon), Methylcellulose, Ethylcellulose, Carboxymethylcellulose, Ethyl(hydroxyethyl)cellulose, Natriumpolyacrylat, deren Copolymeren und deren Kombinationen.

32. Verbundstoff nach Anspruch 28, wobei das wasserlösliche Polymer aus der Gruppe ausgewählt ist mit Polystyrolsulfonat (PSS), Poly(1-vinylpyrrolidon-Co-vinylacetat), Poly(1-vinylpyrrolidon-Co-acrylsäure), Poly(1-vinylpyrrolidon-Co-dimethylaminoethylmethacrylat), Polyvinylsulfat, Poly(natriumstyrolsulfonsäure-Co-maleinsäure), Dextran, Dextransulfat, Gelatine, Rinderserumalbumin, Poly(methylmethacrylat-Co-ethylacrylat), Polyallylamin und deren Kombinationen.

33. Verbundstoff nach Anspruch 1, wobei die Polymerteilchen ein Polymer umfassen, das aus der Gruppe ausgewählt ist mit Poly(vinylacetat) und Poly(vinylacetat)-Copolymer, und der Polymerteilchenstabilisator Poly(vinylalkohol) umfasst.

34. Verbundstoff nach Anspruch 1, wobei der Kohlenstoff-Nanoröhren-Polymer-Verbundstoff Nanoröhren in einer Menge von weniger als 0,1 Gew.-%, bezogen auf das Gewicht des Verbundstoffs, umfasst.

35. Verbundstoff nach Anspruch 1, wobei die Kohlenstoff-Nanoröhren-Suspension zudem ein oder mehr leitende Füllstoffe umfasst.

36. Verbundstoff nach Anspruch 35, wobei der ein oder die mehr leitenden Füllstoffe aus der Gruppe ausgewählt sind mit Rußschwarz, kleinen Fullerenen und deren Kombinationen.

37. Verbundstoff nach Anspruch 36, wobei die kleinen Fullerene aus der Gruppe ausgewählt sind mit $C_{60}$, $C_{70}$, $C_{84}$ und deren Kombinationen.

38. Verbundstoff nach Anspruch 9, wobei der Nanoröhren-Polymer-Verbundstoff einwandige Kohlenstoff-Nanoröhren umfasst, wobei das Polymer Polyvinylacetat ist und der Nanoröhren-Polymer-Verbundstoff eine Perkolationsschwelle von weniger als 0,04 Gew.-% hat, bezogen auf das Gewicht der einwandigen Kohlenstoff-Nanoröhren in dem Verbundstoff.

39. Verbundstoff nach Anspruch 1, der in Form eines Films vorliegt.

40. Verbundstoff nach Anspruch 39, wobei Film eine Dicke im Bereich von 25 Mikron bis 500 Mikron hat.

41. Verfahren zur Herstellung eines leitenden Kohlenstoff-Nanoröhren-Polymer-Verbundstoffs, umfassend:

(a) Herstellen einer Kohlenstoff-Nanoröhren-Suspension, die Kohlenstoff-Nanoröhren und ein erstes Lösungsmittel umfasst;
(b) Mischen der Kohlenstoff-Nanoröhren-Suspension mit einer Polymersuspension, die ein Polymer und ein zweites Lösungsmittel umfasst, wobei das Polymer in Form von Polymerteilchen vorliegt, so dass eine Kohlenstoff-Nanoröhren-Polymer-Suspension hergestellt wird, und
(c) Entfernen des ersten Lösungsmittels und des zweiten Lösungsmittels aus der Kohlenstoff-Nanoröhren-Polymer-Suspension unter Bildung eines Kohlenstoff-Nanoröhren-Polymer-Verbundstoffs, wobei die Polymerteilchen koaleszieren und die Kohlenstoff-Nanoröhren größtenteils zwischen den Polymerteilchen vorliegen, wobei die Kohlenstoff-Nanoröhren auf mikroskopischer Ebene inhomogen in dem Kohlenstoff-Nanoröhren-Polymer-Verbundstoff verteilt sind und der Verbundstoff Nanoröhren in einer Menge von weniger als 1 Gew.-%, bezogen auf das Gewicht des Verbundstoffs, umfasst.

42. Verfahren nach Anspruch 41, wobei das erste Lösungsmittel Wasser ist.

43. Verfahren nach Anspruch 42, wobei das zweite Lösungsmittel Wasser ist.

44. Verfahren nach einem der Ansprüche 41 bis 43, wobei die Kohlenstoff-Nanoröhren aus der Gruppe ausgewählt sind mit einwandigen Kohlenstoff-Nanoröhren, mehrwandigen Kohlenstoff-Nanoröhren und deren Kombination.

45. Verfahren nach Anspruch 44, wobei die Kohlenstoff-Nanoröhren gereinigt sind.

46. Verfahren nach Anspruch 45, wobei die Kohlenstoff-Nanoröhren-Suspension zudem einen Nanoröhren-Stabilisator umfasst.

47. Verfahren nach Anspruch 46, wobei der Nanoröhren-Stabilisator ein oberflächenaktives Mittel ist.

48. Verfahren nach Anspruch 47, wobei das oberflächenaktive Mittel Natriumdodecylsulfat ist.

49. Verfahren nach Anspruch 47, wobei das oberflächenaktive Mittel eine Fettsäureseife ist.

50. Verfahren nach Anspruch 46, wobei der Nanoröhren-Stabilisator ein Protein ist.

51. Verfahren nach Anspruch 46, wobei der Nanoröhren-Stabilisator Gummiarabicum ist.

52. Verfahren nach Anspruch 46, wobei der Nanoröhren-Stabilisator ein wasserlösliches Polymer ist.

53. Verfahren nach Anspruch 52, wobei das wasserlösliche Polymer Poly(vinylpyrrolidon) ist.

54. Verfahren nach Anspruch 52, wobei das wasserlösliche Polymer aus der Gruppe ausgewählt ist mit amphiphilen Polymeren, Cellulosepolymeren, Polyelektrolyten, ionischen Polymeren, Acrylatpolymeren, Acrylsäurepolymeren, deren Copolymeren und deren Kombinationen.

55. Verfahren nach Anspruch 52, wobei das wasserlösliche Polymer aus der Gruppe ausgewählt ist mit Poly(vinylalkohol), Poly(acrylsäure), Poly(methacrylsäure), Natriumpolyacrylat, Polyacrylamid, Poly(ethylenoxid), Polyethylenglycol, Poly(ethylenformamid), Polyhydroxyether, Poly(vinylpyrrolidon), Poly(vinyloxazolidinon), Methylcellulose, Ethylcellulose, Carboxymethylcellulose, Ethyl(hydroxyethyl)cellulose, Natriumpolyacrylat, deren Copolymeren und deren Kombinationen.

56. Verfahren nach Anspruch 52, wobei das wasserlösliche Polymer aus der Gruppe ausgewählt ist mit Polystyrolsulfonat (PSS), Poly(1-vinylpyrrolidon-Co-vinylacetat), Poly(1-vinylpyrrolidon-Co-acrylsäure), Poly(1-vinylpyrrolidon-Co-dimethylaminoethylmethacrylat), Polyvinylsulfat, Poly(natriumstyrolsulfonsäure-Co-maleinsäure), Dextran, Dextransulfat, Gelatine, Rinderserumalbumin, Poly(methylmethacrylat-Co-ethylacrylat), Polyallylamin und deren Kombinationen.

57. Verfahren nach einem der Ansprüche 41 bis 43, wobei die Polymersuspension eine Polymeremulsion umfasst.

58. Verfahren nach einem der Ansprüche 41 bis 43, wobei die Polymersuspension einen Polymerlatex umfasst.

59. Verfahren nach einem der Ansprüche 41 bis 43, wobei die Polymersuspension ein Polymer umfasst, das aus der Gruppe ausgewählt ist mit Poly(vinylacetat) und Copolymeren von Poly(vinylacetat).

60. Verfahren nach einem der Ansprüche 41 bis 43, wobei die Polymersuspension ein Polymer umfasst, das aus der Gruppe ausgewählt ist mit Acrylatpolymeren, Acrylsäurepolymeren, Polyacrylestern, Polyacrylamiden, Polyacrylonitrilen, chlorierten Polymeren, fluorierten Polymeren, Styrolpolymeren, Polyurethanen, Naturkautschuk, synthetischen Kautschukpolymeren, Vinylchlorid-Acrylat-Polymeren, deren Copolymeren und deren Kombinationen.

61. Verfahren nach einem der Ansprüche 41 bis 43, wobei die Polymersuspension ein Polymer umfasst, das aus der Gruppe ausgewählt ist mit Poly(vinylacetat), Poly(acrylsäure), Poly(methylmethacrylat), Polyacrylamid, Polyacrylonitril, Polyvinylpropionat, Polystyrol, Polytetrafluorethylen, Poly(vinylchlorid), Poly(vinylidenchlorid), Poly(vinylchlorid-ethylen), Poly(vinylchlorid-ethylen), Poly(vinylchlorid-propylen), Poly(styrol-Co-butadien), Styrolacrylat-Copolymeren, Vinylethylen-Vinylchlorid-Copolymer, Poly(vinylacetat-acrylat), Poly(vinylacetat-ethylen) und deren Kombinationen.

62. Verfahren nach einem der Ansprüche 41 bis 43, wobei die Polymersuspension zudem einen Polymerstabilisator umfasst.

63. Verfahren nach Anspruch 62, wobei der Polymerstabilisator ein oberflächenaktives Mittel ist.

64. Verfahren nach Anspruch 63, wobei das oberflächenaktive Mittel Natriumdodecylsulfat ist.

65. Verfahren nach Anspruch 63, wobei das oberflächenaktive Mittel eine Fettsäureseife ist.

66. Verfahren nach Anspruch 62, wobei der Polymerstabilisator ein Protein ist.

67. Verfahren nach Anspruch 62, wobei der Polymerstabilisator ein wasserlösliches Polymer ist.

68. Verfahren nach Anspruch 67, wobei das wasserlösliche Polymer Poly(vinylalkohol) ist.

**EP 1 623 437 B1**

**69.** Verfahren nach Anspruch 67, wobei das wasserlösliche Polymer aus der Gruppe ausgewählt ist mit amphiphilen Polymeren, Cellulosepolymeren, Polyelektrolyten, ionischen Polymeren, Acrylatpolymeren, Acrylsäurepolymeren, deren Copolymeren und deren Kombinationen.

**70.** Verfahren nach Anspruch 67, wobei das wasserlösliche Polymer aus der Gruppe ausgewählt ist mit Gummiarabicum, Poly(acrylsäure), Poly(methacrylsäure), Natriumpolyacrylat, Polyacrylamid, Poly(ethylenoxid), Polyethylenglycol, Poly(ethylenformamid), Polyhydroxyether, Poly(vinylpyrrolidon), Poly(vinyloxazolidinon), Methylcellulose, Ethylcellulose, Carboxymethylcellulose, Ethyl(hydroxyethyl)cellulose, Natriumpolyacrylat, deren Copolymeren und deren Kombinationen.

**71.** Verfahren nach Anspruch 67, wobei das wasserlösliche Polymer aus der Gruppe ausgewählt ist mit Polystyrolsulfonat (PSS), Poly(1-vinylpyrrolidon-Co-vinylacetat), Poly(1-vinylpyrrolidon-Co-acrylsäure), Poly(1-vinylpyrrolidon-Co-dimethylaminoethylmethacrylat), Polyvinylsulfat, Poly(natriumstyrolsulfonsäure-Co-maleinsäure), Dextran, Dextransulfat, Gelatine, Rinderserumalbumin, Poly(methylmethacrylat-Co-ethylacrylat), Polyallylamin und deren Kombinationen.

**72.** Verfahren nach einem der Ansprüche 41-43, wobei die Polymersuspension ein Polymer umfasst, das aus der Gruppe ausgewählt ist mit Poly(vinylacetat) und Poly(vinylacetat)-Copolymer, und die Polymersuspension einen wasserlöslichen Polymerstabilisator umfasst, der Poly(vinylalkohol) umfasst.

**73.** Verfahren nach einem der Ansprüche 41-43, wobei die Polymerteilchen in jeder Ausdehnungsrichtung im Größenbereich von 0,01 Mikron bis 100 Mikron liegen.

**74.** Verfahren nach einem der Ansprüche 41-43, wobei die Polymerteilchen in jeder Ausdehnungsrichtung im Größenbereich von 0,01 Mikron bis 10 Mikron liegen.

**75.** Verfahren nach einem der Ansprüche 41-43, wobei Kohlenstoff-Nanoröhren-Suspension zudem ein oder mehr leitende Füllstoffe umfasst.

**76.** Verfahren nach Anspruch 75, wobei der ein oder die mehr leitenden Füllstoffe aus der Gruppe ausgewählt sind mit Rußschwarz, kleinen Fullerenen und deren Kombinationen.

**77.** Verfahren nach Anspruch 76, wobei die kleinen Fullerene aus der Gruppe ausgewählt sind mit $C_{60}$, $C_{70}$, $C_{84}$ und deren Kombinationen.

**78.** Verfahren nach Anspruch 51, wobei der Nanoröhren-Polymer-Verbundstoff einwandige Kohlenstoff-Nanoröhren umfasst, wobei das Polymer Polyvinylacetat ist und der Nanoröhren-Polymer-Verbundstoff eine Perkolationsschwelle von weniger als 0,04 Gew.-% hat, bezogen auf das Gewicht der einwandigen Kohlenstoff-Nanoröhren in dem Verbundstoff.

**79.** Verfahren nach Anspruch 41, wobei das erste Lösungsmittel und das zweite Lösungsmittel gleich sind.

**80.** Verfahren nach Anspruch 41, wobei das erste Lösungsmittel und das zweite Lösungsmittel verschieden sind.

**81.** Verfahren nach Anspruch 41, wobei das erste Lösungsmittel und das zweite Lösungsmittel Toluol umfassen.

**Revendications**

**1.** Composite conducteur comprenant des nanotubes de carbone et un polymère, comprenant :

(a) des nanotubes de carbone en une quantité représentant moins de 1 % du poids du composite ; et
(b) un polymère sous la forme de particules de polymère coalescées, les nanotubes de carbone étant dispersés de manière non homogène au niveau microscopique dans le composite comprenant des nanotubes de carbone et un polymère, les nanotubes de carbone se trouvant principalement entre les particules de polymère coalescées et les nanotubes de carbone formant un réseau d'interconnexion entre au moins certaines des particules de polymère coalescées.

**2.** Composite suivant la revendication 1, dans lequel les nanotubes de carbone sont choisis dans le groupe consistant en des nanotubes de carbone à une seule paroi, des nanotubes de carbone à plusieurs parois et leurs combinaisons.

**3.** Composite suivant la revendication 2, dans lequel les nanotubes de carbone sont purifiés.

**4.** Composite suivant la revendication 2 comprenant en outre un agent de stabilisation des nanotubes.

**5.** Composite suivant la revendication 4, dans lequel l'agent de stabilisation des nanotubes est un tensioactif.

**6.** Composite suivant la revendication 5, dans lequel le tensioactif est le dodécylsulfate de sodium.

**7.** Composite suivant la revendication 5, dans lequel l'agent tensioactif est un savon d'acide gras.

**8.** Composite suivant la revendication 4, dans lequel l'agent de stabilisation des nanotubes est une protéine.

**9.** Composite suivant la revendication 4, dans lequel l'agent de stabilisation des nanotubes est de la gomme arabique.

**10.** Composite suivant la revendication 4, dans lequel l'agent de stabilisation des nanotubes est un polymère soluble dans l'eau.

**11.** Composite suivant la revendication 10, dans lequel le polymère soluble dans l'eau est de la polyvinyl pyrrolidone.

**12.** Composite suivant la revendication 10, dans lequel le polymère soluble dans l'eau est choisi dans le groupe consistant en des polymères amphiphiles, des polymères cellulosiques, des polyélectrolytes, des polymères ioniques, des polymères d'acrylate, des polymères d'acide acrylique, leurs copolymères et leurs combinaisons.

**13.** Composite suivant la revendication 10, dans lequel le polymère soluble dans l'eau est choisi dans le groupe consistant en l'alcool polyvinylique, en le poly(acide acrylique), en le poly(acide méthacrylique), en le poly(acrylate de sodium), le polyacrylamide, en le poly(oxyde d'éthylène), en le polyéthylène glycol, en le polyéthylène formamide, en le polyhydroxyéther, en la polyvinyl pyrrolidone, en la polyvinyl oxazolidinone, en la méthyl cellulose, en l'éthyl cellulose en la carboxyméthyl cellulose, en l'éthylhydroxyéthyle cellulose, en le poly(acrylate de sodium), en leurs copolymères et en leurs combinaisons.

**14.** Composite suivant la revendication 10, dans lequel le polymère soluble dans l'eau est choisi dans le groupe consistant en le polystyrène sulfonate (PSS), en le poly(1-vinyl pyrrolidone co-acétate de vinyle), en le poly(1-vinyl pyrrolidone co-acide acrylique, en le poly(1-vinyl pyrrolidone co-méthacrylate de diméthylaminoéthyle), en le poly(sulfate de vinyle), en le poly(sodium acide styrène sulfonique co-acide maléique), en le dextran, en le sulfate de dextran, en la gélatine, en l'albumine de sérum bovin, en le poly(méthacrylate de méthyle co-acrylate d'éthyle), en la polyallyl amine, et en leurs combinaisons.

**15.** Composite suivant la revendication 10, dans lequel les particules de polymère dérivent d'un polymère en émulsion.

**16.** Composite suivant la revendication 10, dans lequel les particules de polymère dérivent d'un latex polymère.

**17.** Composite suivant la revendication 1, dans lequel les particules de polymère ont une dimension comprise entre 0,01 micron et 100 microns dans n'importe quelle dimension.

**18.** Composite suivant la revendication 1, dans lequel les particules de polymère ont une dimension comprise entre 0,1 micron et 10 microns dans n'importe quelle dimension.

**19.** Composite suivant la revendication 1, dans lequel les particules de polymère ont une dimension comprise entre 0,5 micron et 5 microns dans n'importe quelle dimension.

**20.** Composite suivant la revendication 1, dans lequel les particules de polymère comprennent un polymère choisi dans le groupe consistant en du poly(acétate de vinyle) et en des copolymères de poly(acétate de vinyle).

**21.** Composite suivant la revendication 1, dans lequel les particules de polymère comprennent un polymère choisi dans le groupe choisi parmi les polymères d'acrylate, les polymères d'acide acrylique, les polyesters acryliques, les polyacrylamides, les polyacrylonitriles, les polymères chlorés, les polymères fluorés, les polymères styréniques, les polyuréthanes, le caoutchouc naturel, les polymères de caoutchouc naturel, les polymères de chlorure de vinyle-acrylate, leurs copolymères et leurs combinaisons.

22. Composite suivant la revendication 1, dans lequel les particules de polymère comprennent un polymère choisi dans le groupe consistant en le poly(acétate de vinyle), le poly(acide acrylique), le poly(méthacrylate de méthyle), le polyacrylamide, le polyacrylonitrile, le poly(propionate de vinyle), le polystyrène, le polytétrafluoréthylène, le poly(chlorure de vinyle), le poly(chlorure de vinylidène), le poly(chlorure de vinyle-éthylène), le poly(chlorure de vinyle-propylène), le poly(styrène-co-butadiène), les copolymères de styrène et d'acrylate, les copolymères de vinyléthylène et de chlorure de vinyle, le poly(acétate de vinyle-acétate), le poly(acétate de vinyle-éthylène) et leurs combinaisons.

23. Composite suivant la revendication 1 comprenant en outre un agent de stabilisation des particules de polymère.

24. Composite suivant la revendication 23, dans lequel l'agent de stabilisation des particules de polymère est un agent tensioactif.

25. Composite suivant la revendication 24, dans lequel l'agent tensioactif est le dodécylsulfate de sodium.

26. Composite suivant la revendication 24, dans lequel l'agent tensioactif est un savon d'acide gras.

27. Composite suivant la revendication 23, dans lequel l'agent de stabilisation du polymère est une protéine.

28. Composite suivant la revendication 23, dans lequel l'agent de stabilisation des particules de polymère est un polymère soluble dans l'eau.

29. Composite suivant la revendication 28, dans lequel le polymère soluble dans l'eau est de l'alcool polyvinylique.

30. Composite suivant la revendication 28, dans lequel le polymère soluble dans l'eau est choisi dans le groupe consistant en des polymères amphiphiles, en des polymères cellulosiques, en des polyélectrolytes, en des polymères ioniques, en des polymères d'acrylate, en des polymères d'acide acrylique, leurs copolymères et leurs combinaisons.

31. Composite suivant la revendication 26, dans lequel le polymère soluble dans l'eau est choisi dans le groupe consistant en la gomme arabique, en le poly(acide acrylique), en le poly(acide méthacrylique), en le poly(acrylate de sodium), en le polyacrylamide, en le poly(oxyde d'éthylène), en le polyéthylène glycol, en le polyéthylène formamide, en le polyhydroxyéther, en la polyvinyl pyrrolidone, en la polyvinyl oxazolidinone, en la méthyl cellulose, en l'éthyl cellulose, en la carboxyméthyl cellulose, en l'éthyl(hydroxyéthyl) cellulose, en le poly(acrylate de sodium), en leurs copolymères et en leurs combinaisons.

32. Composite suivant la revendication 28, dans lequel le polymère soluble dans l'eau est choisi dans le groupe consistant en le polystyrène sulfonate (PSS), en le poly(1-vinyl pyrrolidone co-acétate de vinyle), en le poly(1-vinyl pyrrolidone co-acide acrylique), en le poly(1-vinyl pyrrolidone co-méthacrylate de diméthylaminoéthyle), en le poly(sulfate de vinyle), en le poly(sodium acide styrène sulfonique co-acide maléique), en le dextran, en le sulfate de dextran, en la gélatine, en l'albumine de sérum bovin, en le poly(méthacrylate de méthyle co-acrylate d'éthyle), en la polyallyl amine, et en leurs combinaisons.

33. Composite suivant la revendication 1, dans lequel les particules de polymère comprennent un polymère choisi dans le groupe consistant en le poly(acétate de vinyle) et un copolymère de poly(acétate de vinyle) et l'agent de stabilisation des particules comprend de l'alcool polyvinylique.

34. Composite suivant la revendication 1, dans lequel le composite de nanotubes de carbone et de polymère comprend des nanotubes en une quantité représentant moins de 0,1 % du poids du composite.

35. Composite suivant la revendication 1, dans lequel la suspension des nanotubes de carbone comprend en outre une ou plusieurs charges conductrices.

36. Composite suivant la revendication 35, dans lequel une ou plusieurs charges conductrices sont choisies dans le groupe consistant en du noir de carbone, des petits fullerènes et leurs combinaisons.

**37.** Composite suivant la revendication 36, dans lequel les petites fullerènes sont choisis dans le groupe consistant en $C_{60}$, $C_{70}$, $C_{84}$ et leurs combinaisons.

**38.** Composite suivant la revendication 9, dans lequel le composite de nanotubes de polymère comprend des nanotubes de carbone à paroi unique, le polymère étant du polyacétate de vinyle et le composite de nanotubes de polymère a un seuil de percolation inférieur à 0,04 % en poids de nanotubes de carbone à paroi unique dans le composite.

**39.** Composite suivant la revendication 1, dans lequel le composite est sous la forme d'un film.

**40.** Composite suivant la revendication 39, dans lequel le film a une épaisseur comprise entre 25 microns et 500 microns.

**41.** Procédé pour faire un composite conducteur de nanotubes de carbone et de polymère, dans lequel :

(a) on forme une suspension de nanotubes de carbone comprenant des nanotubes de carbone et un premier solvant ;
(b) on mélange la suspension de nanotubes de carbone et une suspension de polymère, la suspension de polymère comprenant un polymère et un deuxième solvant et le polymère étant sous la forme de particules de polymère pour former une suspension de nanotubes de carbone et de polymère ; et
(c) on élimine le premier solvant et le deuxième solvant de la suspension de nanotubes de carbone et de polymère pour former un composite de nanotubes de carbone et de polymère, les particules de polymère coalescant et les nanotubes de carbone se trouvant principalement entre les particules de polymère, les nanotubes de carbone étant dispersés d'une manière qui n'est pas homogène au niveau microscopique dans le composite de nanotubes de carbone et de polymère et le composite comprenant des nanotubes en une quantité représentant moins de 1 % du poids du composite.

**42.** Procédé suivant la revendication 41, dans lequel le premier solvant est l'eau.

**43.** Procédé suivant la revendication 42, dans lequel le deuxième solvant est l'eau.

**44.** Procédé suivant l'une quelconque des revendications 41 à 43, dans lequel les nanotubes de carbone sont choisis dans le groupe consistant en des nanotubes de carbone à une seule paroi, des nanotubes de carbone à plusieurs parois et leurs combinaisons.

**45.** Procédé suivant la revendication 44, dans lequel on purifie les nanotubes de carbone.

**46.** Procédé suivant la revendication 45, dans lequel la suspension de nanotubes de carbone comprend en outre un agent de stabilisation des nanotubes.

**47.** Procédé suivant la revendication 46, dans lequel l'agent de stabilisation des nanotubes est un agent tensioactif.

**48.** Procédé suivant la revendication 47, dans lequel l'agent tensioactif est du dodécylsulfate de sodium.

**49.** Procédé suivant la revendication 47, dans lequel l'agent tensioactif est un savon d'acide gras.

**50.** Procédé suivant la revendication 46, dans lequel l'agent de stabilisation des nanotubes est une protéine.

**51.** Procédé suivant la revendication 46, dans lequel l'agent de stabilisation des nanotubes est de la gomme arabique.

**52.** Procédé suivant la revendication 46, dans lequel l'agent de stabilisation des nanotubes est un polymère soluble dans l'eau.

**53.** Procédé suivant la revendication 52, dans lequel le polymère soluble dans l'eau est la polyvinyl pyrrolidone.

**54.** Procédé suivant la revendication 52, dans lequel le polymère soluble dans l'eau est choisi dans le groupe consistant en des polymères amphiphiles, en des polymères cellulosiques, en des polyélectrolytes, en des polymères ioniques, en des polymères d'acrylate, en des polymères d'acide acrylique, leurs copolymères et leurs combinaisons.

**55.** Procédé suivant la revendication 52, dans lequel le polymère soluble dans l'eau est choisi dans le groupe consistant en la gomme arabique, en le poly(acide acrylique), en le poly(acide méthacrylique), en le poly(acrylate de sodium), en le polyacrylamide, en le poly(oxyde d'éthylène), en le polyéthylène glycol, en le polyéthylène formamide, en le polyhydroxyéther, en la polyvinyl pyrrolidone, en la polyvinyl oxazolidinone, en la méthyl cellulose, en l'éthyl cellulose, en la carboxyméthyl cellulose, en l'éthyl(hydroxyéthyl) cellulose, en le poly(acrylate de sodium), en leurs copolymères et en leurs combinaisons.

56. Procédé suivant la revendication 52, dans lequel le polymère soluble dans l'eau est choisi dans le groupe consistant en le polystyrène sulfonate (PSS), en le poly(1-vinyl pyrrolidone co-acétate de vinyle), en le poly(1-vinyl pyrrolidone co-acide acrylique, en le poly(1-vinyl pyrrolidone co-méthacrylate de diméthylaminoéthyle), en le poly(sulfate de vinyle), en le poly(sodium acide styrène sulfonique co-acide maléique), en le dextran, en le sulfate de dextran, en la gélatine, en l'albumine de sérum bovin, en le poly(méthacrylate de méthyle co-acrylate d'éthyle), en la polyallyle amine, et en leurs combinaisons.

57. Procédé suivant l'une quelconque des revendications 41 à 43, dans lequel la suspension de polymère comprend une émulsion de polymère.

58. Procédé suivant l'une quelconque des revendications 41 à 43, dans lequel la suspension de polymère comprend un latex de polymère.

59. Procédé suivant l'une quelconque des revendications 41 à 43, dans lequel la suspension de polymère comprend un polymère choisi dans le groupe consistant en le poly(acétate de vinyle) et en les copolymères de poly(acétate de vinyle).

60. Procédé suivant l'une quelconque des revendications 41 à 43, dans lequel la suspension de polymère comprend un polymère choisi dans le groupe choisi parmi les polymères d'acrylate, les polymères d'acide acrylique, les polyesters acryliques, les polyacrylamides, les polyacrylonitriles, les polymères chlorés, les polymères fluorés, les polymères styréniques, les polyuréthanes, le caoutchouc naturel, les polymères de caoutchouc naturel, les polymères de chlorure de vinyle-acrylate, leurs copolymères et leurs combinaisons.

61. Procédé suivant l'une quelconque des revendications 41 à 43, dans lequel la suspension de polymère comprend un polymère choisi dans le groupe consistant en le poly(acétate de vinyle), le poly(acide acrylique), le poly(métahcrylate de méthyle), le polyacrylamide, le polyacrylonitrile, le poly(propionate de vinyle), le polystyrène, le polytétrafluoroéthylène, le poly(chlorure de vinyle), le poly(chlorure de vinylidène), le poly(chlorure de vinyle-éthylène), le poly(chlorure de vinyle-propylène), le poly(styrène-co-butadiène), les copolymères de styrène et d'acrylate, les copolymères de vinyléthylène et de chlorure de vinyle, le poly(acétate de vinyle-acétate), le poly(acétate de vinyle-éthylène) et leurs combinaisons.

62. Procédé suivant l'une quelconque des revendications 41 à 43, dans lequel la suspension de polymère comprend en outre un agent de stabilisation de polymère.

63. Procédé suivant la revendication 62, dans lequel l'agent de stabilisation de polymère est un agent tensioactif.

64. Procédé suivant la revendication 63, dans lequel l'agent tensioactif est le dodécylsulfate de sodium.

65. Procédé suivant la revendication 63, dans lequel l'agent tensioactif est un savon d'acide gras.

66. Procédé suivant la revendication 62, dans lequel l'agent de stabilisation du polymère est une protéine.

67. Procédé suivant la revendication 62, dans lequel l'agent de stabilisation du polymère est un polymère soluble dans l'eau.

68. Procédé suivant la revendication 67, dans lequel le polymère soluble dans l'eau est l'alcool polyvinylique.

69. Procédé suivant la revendication 67, dans lequel le polymère soluble dans l'eau est choisi dans le groupe consistant en des polymères amphiphiles, en des polymères cellulosiques, en des polyélectrolytes, en des polymères ioniques, en des polymères d'acrylate, en des polymères d'acide acrylique, leurs copolymères et leurs combinaisons.

70. Procédé suivant la revendication 67, dans lequel le polymère soluble dans l'eau est choisi dans le groupe consistant en la gomme arabique, en le poly(acide acrylique), en le poly(acide méthacrylique), en le poly(acrylate de sodium), en le polyacrylamide, en le poly(oxyde d'éthylène), en le polyéthylène glycol, en le polyéthylène formamide, en le polyhydroxyéther, en la polyvinyl pyrrolidone, en la polyvinyl oxazolidinone, en la méthyl cellulose, en l'éthyl cellulose, en la carboxyméthyl cellulose, en l'éthyl(hydroxyéthyl) cellulose, en le polyacrylate de sodium, en leurs copolymères et en leurs combinaisons.

71. Procédé suivant la revendication 67, dans lequel le polymère soluble dans l'eau est choisi dans le groupe consistant en le polystyrène sulfonate (PSS), en le poly(1-vinyl pyrrolidone co-acétate de vinyle), en le poly(1-vinyl pyrrolidone co-acide acrylique, en le poly(1-vinyl pyrrolidone co-méthacrylate de diméthylaminoéthyle), en le poly(sulfate de vinyle), en le poly(sodium acide styrène sulfonique co-acide maléique), en le dextran, en le sulfate de dextran, en la gélatine, en l'albumine de sérum bovin, en le poly(méthacrylate de méthyle co-acrylate d'éthyle), en la polyallyl amine, et en leurs combinaisons.

72. Procédé suivant l'une quelconque des revendications 41 à 43, dans lequel la suspension de polymère comprend un polymère choisi dans le groupe consistant en le poly(acétate de vinyle) et un copolymère de poly(acétate de vinyle) et la suspension de polymère comprend un agent soluble dans l'eau de stabilisation de polymère comprenant de l'alcool polyvinylique.

73. Procédé suivant l'une quelconque des revendications 41 à 43, dans lequel les particules de polymère sont d'une dimension comprise entre 0,01 micron et 100 microns dans l'importe quelle dimension.

74. Procédé suivant l'une quelconque des revendications 41 à 43, dans lequel les particules de polymère sont d'une dimension comprise entre 0,01 micron et 10 microns dans l'importe quelle dimension.

75. Procédé suivant l'une quelconque des revendications 41 à 43, dans lequel la suspension de nanotubes de carbone comprend en outre une ou plusieurs charges conductrices.

76. Procédé suivant la revendication 75, dans lequel la une ou plusieurs charges conductrices sont choisies dans le groupe consistant en noir de carbone, en petits fullerènes et en leurs combinaisons.

77. Procédé suivant la revendication 76, dans lequel les petits fullerènes sont choisis dans le groupe consistant en $C_{60}$, $C_{70}$, $C_{84}$ et leurs combinaisons.

78. Procédé suivant la revendication 51, dans lequel le composite de nanotubes de polymère comprend des nanotubes de carbone à paroi unique, le polymère étant du poly(acétate de vinyle) et le composite de nanotubes de polymère a un seuil de percolation inférieur à environ 0,04 % en poids de nanotubes de carbone à paroi unique dans le composite.

79. Procédé suivant la revendication 41, dans lequel le premier solvant et le deuxième solvant sont les mêmes.

80. Procédé suivant la revendication 41, dans lequel le premier solvant et le deuxième solvant sont différents.

81. Procédé suivant la revendication 41, dans lequel le premier solvant et le deuxième solvant comprennent du toluène.

**Figure 1A**     **Figure 1B**     **Figure 1C**

1. Suspension in Water

2. Close-Packing During Drying

3. Polymer Interdiffusion (Coalescence)

**Figure 2**

Figure 3A

336 nm

**Figure 3B**

63 nm

# Figure 4A

1 μm

# Figure 4B

370 nm

# Figure 5A

# Figure 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02016257 A
- WO 02064869 A
- WO 02064868 A

**Non-patent literature cited in the description**

- **B.I. YAKOBSON ; R. E. SMALLEY.** *American Scientist,* July 1997, vol. 85, 324-337
- **S.A. CURRAN et al.** *Advanced Materials,* 1998, vol. 10, 1091
- **J.N. COLEMAN et al.** *Physical Review B,* 1998, vol. 58
- **GRIMES et al.** *Chemical Physics Letters,* 2000, vol. 319, 460
- **P. FOURNE et al.** *Journal of Applied Physics,* 2001, vol. 90, 969
- **BIERCUK et al.** *Applied Physics Letters,* 2002, vol. 80, 2767
- **M. J. O'CONNELL et al.** *Chem. Phys. Lett,* 2001, vol. 342, 265
- **M. O'CONNELL et al.** *Chem. Phys. Lett,* 2001, vol. 342, 265-271
- **R. BANDYOPADHYAYA et al.** *Nano Lett,* 2002, vol. 2, 25
- Percolation Structures and Processes. **G. DEUTSCHER et al.** Annals of the Israel Physical Society. American Institute of Physics, 1983, vol. 5
- **J.M BENOIT et al.** *Synth. Met.,* 2001, vol. 121, 1215
- **E. KYMAKIS et al.** *Synth Met,* 2002, vol. 127, 39
- **A. DUFRESNE et al.** *J. Mater. Sci.,* 2002, vol. 37, 3915
- **J.C. GRUNLAN.** *J. Mater. Res,* 1999, vol. 14, 4132
- **M-Q. ZHANG.** *Macromolecules,* 1998, vol. 31, 6724